# EUROPEAN PATENT APPLICATION

(11) **EP 4 549 896 A1**
(43) Date of publication of application: **07.05.2025**
(21) Application number: 24210050.1
(22) Date of filing: 31.10.2024
(51) Int. Cl.: G01J 5/02, G01J 5/04, A01K 27/00, A01K 15/02

(54) **TEMPERATURE SENSOR FOR PET LEASH**

(30) Priority: 31.10.2023 US 202363594732 P; 25.10.2024 US 202418926750
(71) Applicant: Crowley & Crowley, LLC, Eugene, Oregon 97404 (US)
(72) Inventor: Crowley, Michael A., Eugene, Oregon 97404 (US); Crowley, Dani, Eugene, Oregon 97404 (US); Crowley, Michael S., Redding, California 96002 (US); Crowley, Lori, Redding, California 96002 (US)
(74) Representative: Laine IP Oy

(57) **Abstract**

This disclosure presents innovative leashes and leash attachments for pet owners, featuring embedded sensors and interactive features. These leashes offer real-time environmental feedback, enhancing safety and convenience during outdoor activities. With a durable and versatile design, the smart leashes provide a revolutionary tool for a more informed and interactive pet care experience.

## Description

### CROSS REFERENCE TO RELATED APPLICATIONS

This application claims the benefit of U.S. Provisional Patent Application Serial No. 63/594,732 filed October 31, 2023 and entitled "SMART LEASH." The complete disclosure of the above application is hereby incorporated by reference for all purposes.

### SUMMARY OF THE DISCLOSURE

The present disclosure pertains to the field of pet accessories and, more specifically, to a novel and innovative temperature sensor for use with a pet leash (hereinafter referred to as a "smart leash") designed to enhance the dog-walking experience by providing real-time environmental data. The smart leash incorporates advanced sensor technology to monitor crucial environmental parameters, ensuring the safety, comfort, and well-being of both dogs and their owners during walks.

Walking dogs is a popular and essential activity for pet owners, contributing to the dog's physical exercise and mental stimulation while fostering the bond between the owner and the pet. However, during dog walks, owners often face challenges in assessing the environmental conditions, such as the surface temperature, humidity levels, or potential hazards, which may affect their pet's comfort, health, and safety. For instance, surfaces with extreme temperatures may pose risks to a dog's paw pads, and high humidity levels may lead to discomfort or dehydration.

Traditional leashes have been in use for some time; however, they suffer from a significant drawback in that they lack the capability to provide real-time environmental data and insights, leaving owners solely reliant on their own senses to assess the suitability of the walking surface. The absence of innovative features and smart capabilities sets it apart from the conventional leash designs.

Therefore, there exists a need for an improved pet leash that empowers owners with accurate and real-time environmental data during walks, thereby ensuring optimal safety and comfort for their pets. The present disclosure fulfills this need by providing a smart leash that incorporates innovative sensor technology and other key features to monitor and communicate vital environmental data, enabling dog owners to make informed decisions during their dog walks.

Building upon the need for an improved pet leash that empowers owners with real-time environmental data during walks, the present disclosure introduces a novel and innovative smart leash designed to transform the dog-walking experience. By providing valuable environmental data in real-time, the smart leash ensures the safety and comfort of both dogs and their owners during walks. With a wide array of embodiments, each incorporating distinct features and functionalities to cater to diverse user preferences and environmental monitoring needs, this inventive smart leash elevates the dog-walking experience.

In one embodiment, the smart leash includes a robust and ergonomic pistol-like grip handle, ensuring a secure and comfortable hold for the owner during walks. Integrated into this grip handle is an actuation button, serving as a gateway to trigger the smart functionalities of the smart leash. Upon activation, the smart leash initiates a sensor system, which may include an Infrared ("IR") sensor, temperature sensor, humidity sensor, and/or other environmental sensors, to capture vital data related to the surrounding conditions.

Another embodiment of the smart leash utilizes a flashlight-like grip handle, adding an element of ergonomics and ease of use for single-handed operation. This design allows dog owners to comfortably hold the leash while activating the sensor system with an intuitive thumb-activated actuation button placed conveniently at the top of the handle.

To further enhance the leash's functionalities, some embodiments incorporate an optional laser pointer. When activated, the laser pointer emits a precise and visible beam, indicating the area on the ground being measured by the sensor(s). This visual aid allows owners to identify potential hazards or areas with varying environmental conditions, further ensuring the safety of their dogs during walks.

The smart leash features a versatile actuation mechanism, offering owners the freedom to engage its smart capabilities through various methods. Owners can choose to rely on the conventional actuation button, or they may opt for alternative methods, such as a touch pad, voice command, or integration with external devices like mobile computing devices or wearable computing devices. This flexible actuation system ensures seamless control and convenience during dog walks, tailored to individual preferences for an enhanced user experience.

In certain embodiments, the smart leash is equipped with an LED indicator or customizable indicator system. The indicator effectively communicates real-time environmental data to the owner, displaying information through various colors, flashing patterns, audible cues, or haptic feedback. This feedback mechanism informs the owner about the suitability of the walking surface or other surrounding environmental conditions, with different indicators representing safe conditions, rising temperatures, or potentially unsafe conditions.

The smart leash incorporates compatibility with external devices, such as mobile computing devices, wearable computing devices, and more, enabling the transmission of captured environmental data for remote monitoring and analysis. This feature grants owners the freedom to conveniently monitor and control the leash's smart capabilities from their devices, enhancing the overall user experience.

Additionally, some embodiments of the smart leash include a waste receptacle bag compartment, promoting efficiency and convenience during walks. The positioning of the compartment at the bottom of the pistol-like grip allows users to retrieve waste bags effortlessly with a free hand, without requiring adjustments to the gripping hand.

Certain embodiments feature a self-leveling sensor configuration, specifically beneficial for IR sensors. This ensures that the sensor always points downward, maintaining optimal performance and accurate measurements. The self-leveling feature enhances the reliability and functionality of the smart leash, guaranteeing accurate data capture and environmental monitoring.

In summary, the present disclosure encompasses a versatile and innovative smart leash with a plethora of embodiments and key features. The leash's design includes distinct handle configurations, sensor systems, indicator options, and compatibility with external devices, catering to diverse user needs and ensuring a safe, enjoyable, and informed dog-walking experience.

### BRIEF DESCRIPTION OF THE SEVERAL DRAWINGS

For a better understanding of the disclosure, and to show how the same may be carried into effect, reference will now be made, by way of example to the accompanying drawings, which:
FIG. 1 shows various illustrative potential components that may be integrated into various embodiments of the present disclosure;
FIG. 2 shows additional illustrative optional components that may be integrated into various embodiments of the present disclosure;
FIG. 3 is an illustrative embodiment of the smart leash;
FIG. 4 is another embodiment of the smart leash, showcasing the device with modified components and different configurations compared to the previous embodiment shown in FIG. 3;
FIG. 5 is another embodiment of the smart leash, showcasing the device with modified components and different configurations compared to the previous embodiment shown in FIG. 3;
FIG. 6 is another embodiment of the smart leash, showcasing the device with modified components and different configurations;
FIG. 7 is another embodiment of the smart leash, showcasing the device with modified components and different configurations;
FIGS. 8, 9, and 10 are various partial views of select components of the smart leash;
FIG. 11 is an illustrative embodiment of the smart leash's exterior functional design;
FIG. 12 is the smart leash, as depicted in FIG. 11, being utilized by an owner in a real-world environment;
FIG. 13 is an illustrative embodiment of the smart leash's exterior functional design;
FIG. 14 is the smart leash, as depicted in FIG. 13, being utilized by an owner in a real-world environment;
FIG. 15 is an illustrative embodiment of the smart leash's exterior functional design;
FIG. 16 is the smart leash, as depicted in FIG. 15, being utilized by an owner in a real-world environment;
FIG. 17 is an illustrative embodiment of the smart leash's exterior functional design;
FIG. 18 is the smart leash, as depicted in FIG. 17, being utilized by an owner in a real-world environment;
FIG. 19 is an illustrative method for utilizing the various embodiments of the devices described in the present disclosure;
FIG. 20 is a schematic diagram of various components of an illustrative data processing system;
FIG. 21 is a schematic representation of an illustrative distributed data processing system.
FIG. 22 is a perspective view of another illustrative embodiment of the smart leash.
FIG. 23 is an exploded view of some of the interior components of the smart leash of FIG. 22.
FIG. 24 is an exploded view of the exterior components of the smart leash of FIG. 22.
FIG. 25 is an exterior, semi-isometric view from above of another illustrative embodiment of the smart leash.
FIG. 26 is an exterior, semi-isometric view from below of the smart leash embodiment of FIG. 25.
FIG. 27 is an exterior, side view of the smart leash of FIG. 25.
FIG. 28 is a cross-sectional side view of the smart leash of FIG. 25, depicting some of the internal components of the smart leash embodiment.

### DETAILED DESCRIPTION OF PREFERRED EMBODIMENTS

Various embodiments of methods and systems of the smart are configured to transmit data between two devices are described below and illustrated in the associated drawings. Unless otherwise specified, the methods and systems of the smart leash system and/or their various components may contain at least one of the structure, components, functionality, and/or variations described, illustrated, and/or incorporated herein. Furthermore, the structures, components, functionalities, and/or variations described, illustrated, and/or incorporated herein in connection with the present disclosure may be included in other devices. The following description of various embodiments is merely illustrative in nature and is in no way intended to limit the disclosure, its application, or uses. Additionally, the advantages provided by the embodiments, as described below, are illustrative in nature and not all embodiments provide the same advantages or the same degree of advantages.

Aspects of methods and systems of the smart leash may be embodied as a computer method, computer system, or computer program product. Accordingly, aspects of the methods and systems of the smart leash may take the form of an entirely hardware embodiment, an entirely software embodiment (including firmware, resident software, micro-code, and the like), or an embodiment combining software and hardware aspects, all of which may generally be referred to herein as a "circuit," "module," or "system." Furthermore, aspects of the smart leash systems and devices may take the form of a computer program product embodied in a computer-readable medium (or media) having computer-readable program code/instructions embodied thereon.

Any combination of computer-readable media may be utilized. Computer-readable media can be a computer-readable signal medium and/or a computer-readable storage medium. A computer-readable storage medium may include an electronic, magnetic, optical, electromagnetic, IR, and/or semiconductor system, apparatus, or device, or any suitable combination of these. More specific examples of a computer-readable storage medium may include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, a solid-state drive, and/or any suitable combination of these and/or the like. In the context of this disclosure, a computer-readable storage medium may include any suitable tangible medium that can contain or store a program for use by or in connection with an instruction execution system, apparatus, or device.

A computer-readable signal medium may include a propagated data signal with computer-readable program code embodied therein, for example, in baseband or as part of a carrier wave. Such a propagated signal may take any of a variety of forms, including electromagnetic, optical, audible, and/or any suitable combination thereof. A computer-readable signal medium may include any computer-readable medium that is not a computer-readable storage medium and that is capable of communicating, propagating, or transporting a program for use by or in connection with an instruction execution system, apparatus, or device.

Program code embodied on a computer-readable medium may be transmitted using any appropriate medium, including wireless, wireline, optical fiber cable, RF, and/or the like, and/or any suitable combination of these.

Computer program code for carrying out operations for aspects of the methods and systems of the smart leash may be written in one or any combination of programming languages, including an object-oriented programming language such as Python, Java, Smalltalk, C++, C Sharp, Swift, and/or the like, and conventional procedural programming languages, such as the C programming languages. The program code may execute entirely on a user's computer, partly on the user's computer, as a stand-alone software package, partly on the user's computer and partly on a remote computer, or entirely on the remote computer or server. In the latter scenario, the remote computer may be connected to the user's computer through any type of network, including a local area network ("LAN") or a wide area network ("WAN"), and/or the connection may be made to an external computer (for example, through the Internet using an Internet Service Provider).

Aspects of the methods and systems of the smart leash are described below with reference to flowchart illustrations and/or block diagrams of methods, apparatuses, systems, and/or computer program products. Each block and/or combination of blocks in a flowchart and/or block diagram may be implemented by computer program instructions. The computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions also can be stored in a computer-readable medium that can direct a computer, other programmable data processing apparatus, and/or other device to function in a particular manner, such that the instructions stored in the computer-readable medium produce an article of manufacture including instructions which implement the function/act specified in the flowchart and/or block diagram block or blocks.

The computer program instructions also can be loaded onto a computer, other programmable data processing apparatus, and/or other device to cause a series of operational steps to be performed on the device to produce a computer-implemented process such that the instructions which execute on the computer or other programmable apparatus provide processes for implementing the functions/acts specified in the flowchart and/or block diagram block or blocks.

Any flowchart and/or block diagram in the drawings is intended to illustrate the architecture, functionality, and/or operation of possible implementations of systems, methods, and computer program products according to aspects of the methods and systems of the smart leash. In this regard, each block may represent a module, segment, or portion of code, which comprises one or more executable instructions for implementing the specified logical function(s). In some implementations, the functions noted in the block may occur out of the order noted in the drawings. For example, two blocks shown in succession may, in fact, be executed substantially concurrently, or the blocks may sometimes be executed in the reverse order, depending upon the functionality involved. Each block and/or combination of blocks may be implemented by special purpose hardware-based systems (or combinations of special purpose hardware and computer instructions) that perform the specified functions or acts.

Embodiments of the present disclosure encompass diverse methods and systems for sensing environmental conditions, such as temperature, moisture, pressure, light, acceleration, motion, distance, and movement, incorporated into a smart leash. The following description, together with the accompanying drawings, illustrates the various embodiments. It will be understood that unless otherwise specified, the smart leash, its methods, systems, and components may encompass a range of structures, functionalities, and variations as disclosed, illustrated, and incorporated herein. Furthermore, the structures, components, functionalities, and variations presented herein may be seamlessly integrated with or combined into other leashes. The subsequent detailed description of the embodiments serves as an illustrative framework and does not intend to limit the scope, applicability, or uses of the disclosure. Additionally, the advantages outlined herein are merely exemplary, and not all embodiments necessarily provide the same advantages or to the same degree.

The present disclosure recognizes dogs as the primary subjects of application for the smart leash; however, it will be understood that the versatile design and functionality of the smart leash extends beyond canine companions. The smart leash's adaptability allows for utilization in a broader range of leashing scenarios involving various animals or pets. Thus, the inclusive scope of the smart leash transcends the canine realm and accommodates diverse use cases that require effective leashing in a broader context.

The present disclosure pertains to methods and systems for a smart leash, also referred to as a "device" herein, exemplified as a smart dog leash. In certain embodiments, the smart leash assumes the form of a temperature-sensing smart leash, effectively measuring the temperature of the walking surface, thereby alerting the owner if it exceeds safe limits for a pet. Furthermore, in embodiments, the smart leash may incorporate multiple sensors to accurately measure various metrics, including but not limited to the pet's walking speed, distance covered, surrounding moisture levels, ambient temperature, atmospheric pressure, other environmental conditions, and the force exerted by the pet when pulling on the leash.

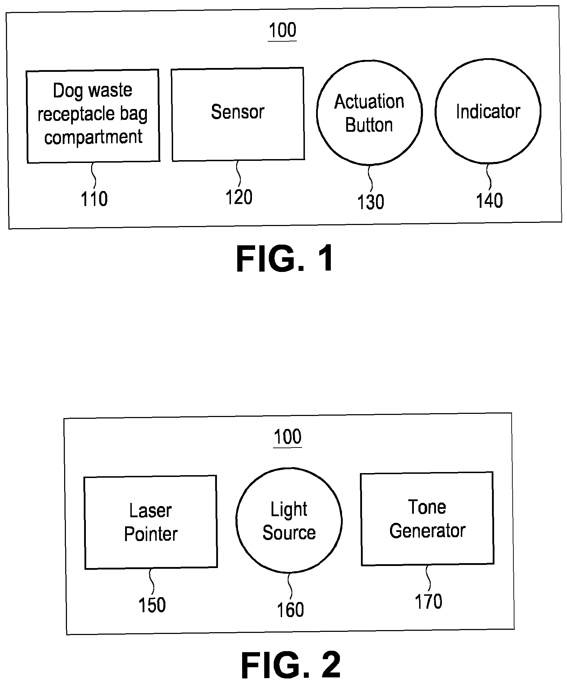

The present disclosure provides a description of potential components utilized in the smart leash, diverse configurations of the smart leash, and a wide range of applications for the smart leash. However, it will be understood that the disclosure is not restricted to the particular embodiment described herein, and that variations may be made therein without departing from the scope of the disclosure. Referring to FIG. 1, various potential components to be integrated into a smart leash 100 are shown, including a waste receptacle bag compartment 110, a sensor 120, an actuation button 130, and an indicator 140.

The waste receptacle bag compartment 110 exhibits versatility in configuration and positioning, as demonstrated in various embodiments to be discussed hereinafter. For instance, in some embodiments, the compartment 110 may be structured to accommodate a roll of waste bags, while in other embodiments, it may accommodate a smaller quantity of waste bags.

Similarly, the sensor 120 encompasses a range of options, including singular sensors such as an IR sensor, or a combination of multiple sensors incorporated into a single component or distributed throughout the smart leash 100. The sensors include, but are not limited to, temperature sensors, moisture sensors, pressure sensors, acceleration sensors, surrounding environmental condition sensors, motion sensors, distance sensors, movement sensors, and GPS location sensors, to facilitate accurate and comprehensive data collection.

In embodiments, the smart leash features an actuation button 130; however, it will be understood that the inclusion of a physical button 130 may not be necessary in all embodiments. Alternative actuation methods, such as touch pads, switches, motion activation, voice activation, integration with external devices for activation such as mobile computing devices or wearable computing devices, and the like, can effectively serve the purpose in some embodiments. In embodiments with a smart leash 100 having multiple sensors 120, specific sensors or functionalities may require an actuation mechanism or button 130, while others operate by continuously measuring and recording relevant data without the need for actuation. Thus, depending on the embodiment, certain smart leashes 100 will have actuation buttons 130 that activate all sensors, actuation buttons 130 that activate some sensors, or no actuation buttons 130 at all.

Certain embodiments incorporate an indicator 140 into the smart leash 100. In one embodiment, the indicator 140 manifests as an LED indicator, employing different colors to convey specific conditions. For example, assuming the smart leash 100 includes a sensor 120 for measuring ground temperature, the indicator 140 may turn red to indicate an excessively high temperature for a dog to walk on, yellow to signal rising temperatures as a warning, or green to indicate an acceptable temperature. Alternatively, the indicator 140 may employ a flashing light, with rapid flashing indicating a high temperature, slow flashing indicating rising temperatures as a warning, and a solid light representing an acceptable temperature, to accommodate individuals that cannot discern color contrasts.

Other forms of indicators are also contemplated, such as an audible speaker or a sound-emitting devices to warn the owner of certain conditions (e.g., rising temperatures, reaching a certain distance) or small displays to showcase sensed information and gathered data from the sensors 120. Some embodiments utilize a vibrating motor as an additional sensory indicator of sensor readings. In some embodiments, the vibrating motor is contained inside the smart leash's handle.

Furthermore, some embodiments may forego an indicator 140 on the smart leash 100 itself, instead relying on communication between the smart leash and other external devices (e.g., mobile computing devices, wearable computing devices, and more) to display the gathered information or data from the one or more sensor(s) 120.

In embodiments, the smart leash 100 includes a GPS location sensor 120, enabling tracking and geolocation functionalities. The GPS sensor 120 allows pet owners to monitor their pet's location in real-time, providing peace of mind and facilitating the retrieval of a lost or missing pet. The GPS location data can be communicated to the owner's mobile computing device or wearable computing device through wireless communication means, such as Bluetooth, Wi-Fi, cellular networks, satellite, or more. The communication may also include additional data collected by other sensors 120, such as temperature, moisture, or acceleration data, to provide a comprehensive picture of the pet's well-being and surrounding environmental conditions.

In some embodiments, a feature of the smart leash 100 is the integration of a communication module, enabling wireless connectivity and data exchange. The communication module may utilize various wireless protocols, such as Bluetooth, Wi-Fi, nearfield communication ("NFC"), or cellular networks, to establish connections with external devices, including but not limited to mobile computing devices, wearable computing devices, etc. This connectivity allows for remote monitoring, control, and interaction with the smart leash 100 and its associated functionalities. For instance, the pet owner can receive alerts, notifications, or status updates on their mobile device regarding the pet's location, activity level, or environmental conditions. For instance, in one embodiment, the smart leash 100 may use such a communication module to connect to a pet owner's smartphone and display the read temperature in Fahrenheit or Celsius or other metrics on the smartphone. An embodiment may include a haptic, audio, tonal, voice, or other alert to notify the owner that the environment is approaching uncomfortable or dangerous conditions for the pet.

Furthermore, in some embodiments, the smart leash 100 may incorporate a memory component or storage module to store data collected by the sensors or user-defined preferences and settings. The memory component may be used to create a historical record of the pet's activities, health metrics, or environmental conditions, enabling the owner to track trends, identify patterns, and make informed decisions regarding their pet's well-being. For instance, in one embodiment the smart leash 100 may track temperatures at various locations and provide data on a map of locations where dangerous or uncomfortable environmental conditions have recently been recorded. The stored data can also be utilized for future analysis, research, or sharing with veterinarians or pet behaviorists. The memory component may also be utilized to set conditions that owners deem unacceptable. For example, this, in some embodiments that contain an IR sensor, enables owners to set what temperatures are deemed safe, rising, and/or high and unacceptable.

In certain embodiments, the smart leash 100 may employ machine learning or artificial intelligence algorithms to analyze the collected data and provide personalized insights or recommendations. For example, the smart leash 100 may learn the pet's activity patterns and suggest suitable walking routes or exercise routines based on the pet's age, breed, and health condition. The smart leash 100 is capable of adapting its behavior or provide customized feedback based on the pet's preferences or training goals, enhancing the effectiveness of the leash in promoting positive behaviors and training outcomes.

It will be understood that the embodiments described above are not exhaustive and that various modifications and additions can be made within the scope of the present disclosure. The smart leash's 100 components, configurations, and functionalities can be tailored to specific use cases or user preferences. For example, additional features, such as a built-in speaker for voice commands or audio feedback, a vibration motor for haptic feedback, or a camera for visual monitoring, can be incorporated into the smart leash 100 to enhance its capabilities. The smart leash 100 can also be designed to be adjustable, durable, and weatherresistant to withstand various environmental conditions and ensure long-lasting performance.

The present disclosure provides a comprehensive and versatile smart leash 100 capable of sensing environmental conditions, monitoring pet activity, and facilitating effective leashing in diverse scenarios. The smart leash's 100 adaptability, advanced sensors 120, indicators 140, wireless connectivity, and data analysis capabilities make it a valuable tool for pet owners, promoting the well-being, safety, and responsible management of pets. The scope of the disclosure is not limited to the specific embodiments described herein, and various modifications and additions can be made without departing from the spirit and scope of the disclosure.

FIG. 2 shows additional components of an embodiment of smart leash 100. As with components discussed with reference to FIG. 1, the smart leash 100 need not include any or all of the additional components described with reference to FIG. 2. Additional components include, but are not limited to, a laser pointer 150, a lighting source 160, and an audio or tone generator 170. Any combination of the additional components may be included in different embodiments of the smart leash 100.

The laser pointer 150, in certain embodiments, serves different purposes. For example, in embodiments where an IR sensor 120 is utilized, the laser pointer 150 may indicate the surface the sensor 120 is measuring. The laser pointer 150 may be actuated simultaneously using a single actuation button 130 that actuates the sensor 120. In embodiments, the laser pointer 150 has its own actuation button 130. In embodiments, the laser pointer 150 is included as an additional feature for pet owners to interact with their pets, such as serving as a target for a pet to chase. In this sense, the owner may point the laser pointer 150 around while the pet is chasing it. This, when combined with a smart leash containing a distance-travelled sensor, can simultaneously measure the distance the pet has travelled while chasing the laser pointer 150 using the sensor 120.

In embodiments, the smart leash 100 includes a light source 160, such as an LED flashlight or a high-intensity LED flashlight. The light source 160 may be actuated using yet another actuation button 130 (e.g., by incorporating an additional actuating button 130). In other embodiments, the light source 160 may be automatically actuated, for example, using a light sensor 120. When the light sensor 120 detects low light conditions, it triggers the light source 160 to illuminate.

Certain embodiments incorporate a tone generator 170 as an alternative to the indicator 140 of FIG. 1. In this embodiment, assuming the smart leash 100 has a sensor 120 to measure ground temperature, for example, the tone generator 170 emits a series of beeps at varying speeds to indicate different temperature levels. For instance, the tone generator 170 may beep rapidly to indicate a high temperature of the ground for a dog to walk on, at a medium speed to indicate rising temperatures, or at a slow speed or continuous beep to indicate an acceptable temperature. The tone generator 170 may emit the beeping sound once, periodically, at specified intervals, continuously, or until a user turns it off using an actuation button 130. The tone generator 170 may also be utilized for other purposes in certain embodiments, such as accessing a library of predetermined sounds, e.g., whistling sounds or commands.

It will be appreciated that the embodiments described above are non-exhaustive, and various modifications and additions can be made within the scope of the present disclosure. The additional components of the smart leash 100, including the laser pointer 150, lighting source 160, and tone generator 170, provide enhanced functionality and interaction for pet owners, making the smart leash 100 more versatile and engaging. The scope of the disclosure is not limited to the specific embodiments described herein, and various modifications and additions can be made without departing from the spirit and scope of the invention.

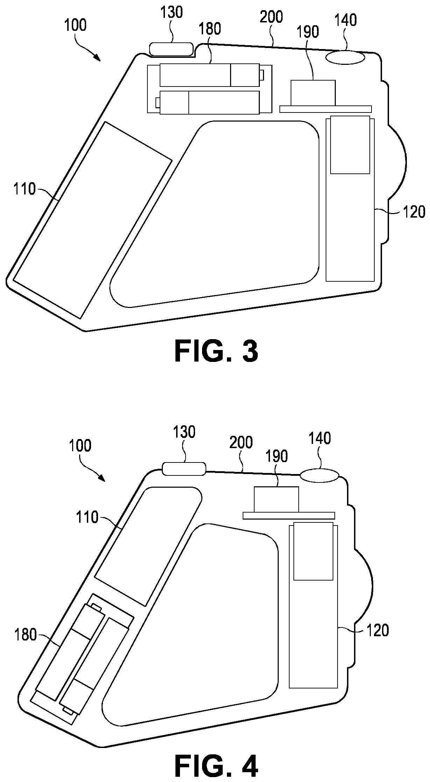

FIG. 3 shows an illustrative embodiment of the smart leash. The smart leash 100 includes any combination of the several components as illustrated in FIGS. 1 and 2, which may or may not be contained in one or more covers 200. When appropriate, the reference numbers in FIG. 3 correspond to similar components in FIGS. 1 and 2. Given the variations of the components to be included, and the configuration of said components, it will be understood that the combinations are endless, thus providing flexibility and adaptability to different applications and designs. The smart leash 100, in some embodiments, incorporates a waste receptacle bag compartment 110, a sensor 120, an actuation button 130, an indicator 140, a power source 180, and a printed circuit board ("PCB") 190.

In accordance with various embodiments, each component of the device 100 can vary based on specific requirements. For instance, the smart leash 100 may incorporate multiple sensors 120, such as an IR sensor for surface level temperature detection and a distance tracker to record distance traveled. These sensors 120 can be selectively employed or combined to provide comprehensive monitoring capabilities.

Moreover, the power source 180 may encompass a wide range of options to cater to different operational needs, including, but not limited to, rechargeable batteries, renewable energy charged batteries, solar batteries, AA batteries, AAA batteries, and any other appropriate power source. The choice of power source 180 can be tailored to specific use cases, ensuring optimal performance and energy efficiency.

The smart leash 100 also includes a customizable PCB 190, which can be adapted to suit various embodiments. For example, embodiments utilizing multiple sensors 120 may require a different PCB configuration than those utilizing a single sensor. The PCB 190 can be designed to incorporate specific components capable of storing data, transferring data, controlling the indicator 140, and facilitating communication with external devices. By allowing customization, the smart leash 100 can be tailored to meet different application requirements and enhance overall functionality.

While the smart leash 100 includes an actuation button 130 for demonstration purposes, it will be understood that several alternative actuation methods can be utilized, eliminating the need for a physical button. For example, motion sensors, voice recognition, or proximity detection mechanisms can be employed to activate the smart leash 100 and/or its functionalities (e.g., sensors 120). These alternative actuation methods provide convenience and improve user experience in different contexts.

Furthermore, the indicator 140 may operate differently based on the embodiment or may not be present at all, particularly in situations where data/information is transmitted to external devices such as mobile computing devices or wearable computing devices. The smart leash 100 can utilize various means to convey information, including visual displays, audio signals, wireless communication protocols, or using an LED light. The flexibility in the indicator's 140 operation enhances the smart leash's 100 adaptability to different user preferences and integration possibilities.

Moreover, the waste receptacle bag compartment 110 can be designed in different sizes or shapes to accommodate varying quantities and sizes of waste bags. This adaptability allows the device to cater to diverse waste management scenarios and ensures efficient waste disposal. The compartment's configuration may include features such as a sealing mechanism to contain odor or a release mechanism to facilitate easy bag replacement.

In certain embodiments, the smart leash 100 incorporates a pistol-like grip, offering an ergonomically designed handle that ensures ease of handling and operation. The inclusion of a pistol-like grip enhances user comfort during operation, promoting a secure and comfortable grip for extended use. Additionally, in embodiments where the sensor 120 is an IR sensor, the pistol-like grip design serves a specific purpose. It positions the sensor 120 in a downward direction, enabling precise temperature measurements of the ground or dog walking surface. This configuration ensures accurate data collection and enhances the smart leash's 100 effectiveness in monitoring temperature-related parameters.

FIG. 4 illustrates an alternative configuration of an embodiment of the present disclosure, showcasing the smart leash 100 with modified components and different configurations compared to the previous embodiment shown in FIG. 3. In this embodiment, the smart leash 100 includes a waste receptacle bag compartment 110, a sensor 120, an actuation button 130, an indicator 140, a power source 180, and a PCB 190. The reference numbers in FIG. 4 correspond to similar components in FIGS. 1-3.

In accordance with various embodiments, each component of the smart leash 100 offers flexibility and customization based on specific requirements. For instance, the waste receptacle bag compartment 110 can be designed in different sizes or shapes to accommodate varying quantities and sizes of waste bags, such as a roll or a small number of bags.

In embodiments, the smart leash 100 may incorporate a single or multiple sensors 120, allowing for adaptability to different uses. The power source 180 can be selected based on specific embodiments and operational needs, ensuring optimal performance and power efficiency. The smart leash 100 also includes a customizable PCB 190, which can be tailored to suit various embodiments. The PCB 190 can be designed to integrate specific components that facilitate data storage, transfer, indicator control, communication with external devices, and efficient power management. This customization option enhances the device's functionality and adaptability.

In some embodiments, the actuation button 130 is included, but it is not a mandatory component. Alternative actuation methods can be utilized, eliminating the need for a physical button. These alternative actuation methods, such as motion sensors, voice recognition, or proximity detection, provide convenience and improve user experience. Similarly, the indicator 140 may operate differently depending on the embodiment or may not be present at all, particularly in situations where data/information is transmitted to external devices such as mobile computing devices or wearable computing devices. The device can employ various means to convey information, including visual displays, audio signals, or wireless communication protocols. This flexibility enhances the device's adaptability to different user preferences and integration possibilities.

Moreover, in certain embodiments, the smart leash 100 features an alternative configuration. The waste receptacle bag compartment 110 and the power source 180 are positioned inside the pistol-like grip of the smart leash 100 in some embodiments. This design choice offers a more balanced device, allowing for comfortable handling and ease of operation. Additionally, this configuration enables proper alignment of the sensor(s) 120, particularly in embodiments where the sensor 120 is an IR sensor. The level positioning assists the IR sensor 120 in pointing straight to the ground, facilitating accurate surface-level temperature measurements.

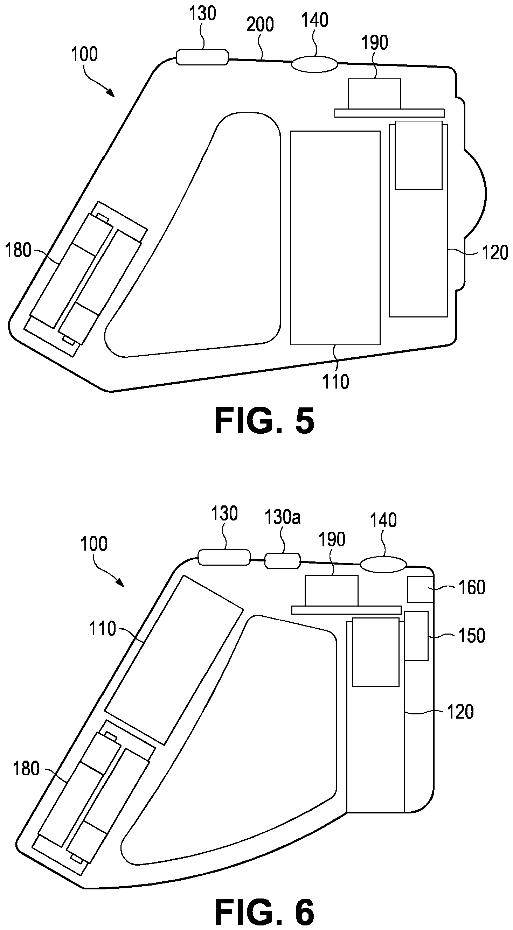

FIG. 5 illustrates an embodiment of the disclosure, showing a different configuration of smart leash 100. The smart leash 100 comprises several components similar to those illustrated in FIGS. 1 and 2, or variations thereof. The reference numbers in FIG. 5 correspond to similar components in FIGS. 1-4. An embodiment of the smart leash 100 incorporates a waste receptacle bag compartment 110, a sensor 120, an actuation button 130, an indicator 140, a power source 180, and a PCB 190.

In some embodiments, the smart leash 100 features the waste receptacle bag compartment 110 positioned near the sensor(s) 120. This design choice allows the users to easily retrieve a waste bag quickly with a free hand, without having to adjust their grip on pistol-like handle where the power source 180 is located. The convenient location of the waste receptacle compartment enhances user experience and ensures efficient access to waste bags during dog walks.

Furthermore, the indicator(s) 140, in some embodiments, is centrally located in the top portion of the smart leash 100 to accommodate various types of indicators. For instance, the indicator 140 can be a display screen that shows information collected or measured by one or more the sensor(s) 120. Multiple indicators 140 may be present on the smart leash 100 to provide enhanced visual feedback and user interaction.

To illustrate this, consider an example where the smart leash 100 contains two sensors 120: an IR sensor and a distance tracker. As dog owners walk their dogs, the IR sensor can be activated using an actuation mechanism, such as an actuation button 130, to measure the surface level the dog is walking on. Simultaneously, the distance tracker measures the distance traveled during the walk and display it to the user, compares it to historical data, data from another sensor(s) 120 (such as ground temperature), etc., to provide recommendations and insights based on the collected information.

It will be understood that while the two sensors 120 in the given example can work simultaneously, this is not a requirement. Similarly, while the distance tracker sensor may rely partly on the IR sensor to make recommendations regarding walk lengths, distance, or alternative surfaces (such as grass) for walks, it is not mandatory. Each sensor 120 can function independently or dependently, based on the specific embodiment.

Referring again to the indicator 140, it may consist of multiple indicators. For example, in the above illustrated embodiment, there could be two types of indicators 140. The first indicator 140 could be an LED indicator, while the second indicator 140 could be a display. The display indicator continuously updates and shows the distance traveled as owners walk their dogs, while the LED indicator flashes at different speeds or displays different colors based on the temperature measured by the corresponding sensor 120. In other embodiments, a single indicator 140 such as a display can be used to show data collected from both sensors 120, providing comprehensive information to the owner. This enhances the user's understanding and engagement with the device during dog walks.

FIG. 6 illustrates an embodiment of the disclosure with additional features, showcasing a smart leash 100 that incorporates several components similar to those illustrated in FIGS. 1 and 2. The reference numbers in FIG. 6 correspond to similar components in FIGS. 1-5. Here, the smart leash 100 features an alternative external design that enhances leveling, grip, and overall user experience. This design alternative ensures optimal performance and usability. The smart leash 100 may include any combination of the following: a waste receptacle bag compartment 110, a sensor 120, an actuation button 130, an additional and/or alternative actuation mechanisms 130a, an indicator 140, a laser pointer 150, a light source 160, a power source 180, and a PCB 190.

Focusing on the additional features in this embodiment, the smart leash 100 incorporates a laser pointer 150, a light source 160, and an alternative actuation mechanism 130a, each serving a different purpose depending on the specific embodiments. These features can be individually integrated or combined in various configurations. For example, certain embodiments may include only the light source 160, while others may combine the light source 160 with a corresponding additional actuation mechanism 130a.

In embodiments, the smart leash 100 includes a laser pointer 150. The laser pointer 150 may be positioned next to a sensor 120. The laser pointer 150 is generally aligned in the same direction as any relevant sensor 120. This alignment ensures that the laser pointer 150 serves as a visual indicator of the sensor's 120 pointing direction. By aligning the laser pointer 150 with the sensor 120, users can easily identify the area on the surface where the sensor 120 is directed, facilitating precise measurements or data collection. This alignment feature enhances the device's usability and ensures accurate targeting of the sensor's 120 focus area. This is particularly useful for sensors 120 where the direction of measurement is a factor, such as an IR sensor. As an illustration, in an embodiment incorporating a laser pointer 150 and an IR sensor 120, when the user actuates the sensor 120 using an actuation button 130 or an alternative actuation mechanism 130a, the laser pointer 150 indicates the location on the surface where the IR sensor 120 is measuring and collecting temperature data, providing users with a visual reference.

In embodiments, the smart leash 100 incorporates a light source 160, such as an LED flashlight or a high-intensity LED flashlight. This light source 160 may require its own additional actuation mechanism 130a. In certain embodiments, the light source 160 can be actuated automatically based on a light sensor 120. For instance, when the ambient light becomes dimmer, indicating darker conditions (e.g., at sunset), the light sensor 120 detects the change and triggers the light source 160 to turn on, providing illumination. In other embodiments, both alternatives may be incorporated, allowing the user to choose between relying on the light sensor 120 or manually actuating the light source 160.

The actuation button 130 and/or the alternative actuation mechanism 130a offer flexibility in their configuration. They can be combined into a single control panel, omitted entirely, or serve dual functions. This flexibility allows for customized control options based on user preferences and based on the specific embodiments. By combining the actuation button 130 and the alternative actuation mechanism 130a into a single control panel, users can conveniently access and operate the device with ease. Alternatively, in certain embodiments, one of the actuation methods may be omitted if it is not necessary or redundant.

As described above, the actuation button 130 and the alternative actuation mechanism 130a can serve dual functions, offering versatility in controlling different features or modes of the device. This flexibility in configuration enhances the user experience and allows for tailored functionality based on specific use cases. In some embodiments, for example, the smart leash 100 is controlled through other devices such as mobile computing devices or wearable computing devices. This flexibility in control options allows for seamless integration with various user interfaces. A corresponding customizable PCB 190 ensures the efficient integration and operation of specific features in different embodiments.

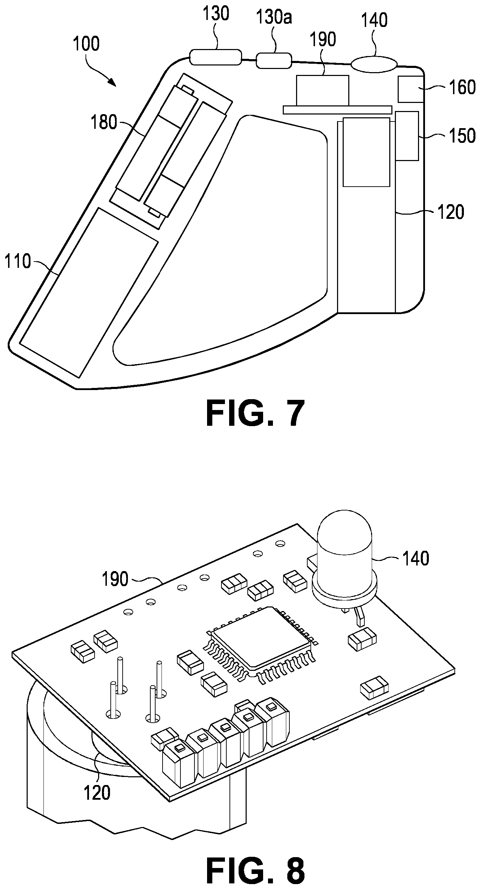

FIG. 7 illustrates an alternative configuration of the present disclosure, showcasing a smart leash 100 with modified components and a different arrangement compared to the previous embodiment shown in FIG. 6. The smart leash 100 may comprise several components similar to those illustrated in FIGS. 1 and 2. The reference numbers in FIG. 7 correspond to similar components in FIGS. 1-6. The smart leash 100, in some embodiments, incorporates a waste receptacle bag compartment 110, a sensor 120, an actuation button 130, an additional and/or alternative actuation mechanisms 130a, an indicator 140, a laser pointer 150, a light source 160, a power source 180, and a PCB 190.

In embodiments, the smart leash 100 utilizes a different configuration from the previously discussed embodiments. The waste receptacle bag compartment 110 and the power source 180 are positioned inside the pistol-like grip of the smart leash 100 in some embodiments. This specific design choice enhances the device's balance and stability, as the weight distribution is optimized. Furthermore, this configuration ensures proper leveling of the smart leash 100. In embodiments where the sensor 120 is an IR sensor, this leveling assists in directing the IR sensor 120 straight to the ground, facilitating accurate surface-level temperature measurements.

In some embodiment, the smart leash 100 features the waste receptacle bag compartment 110 located at the bottom of the pistol-like grip. This positioning allows users to easily retrieve a waste bag quickly with a free hand, without requiring adjustments to the gripping hand. In those embodiments, this ergonomic design choice enhances user convenience and promotes efficient use of the smart leash 100 during dog walks.

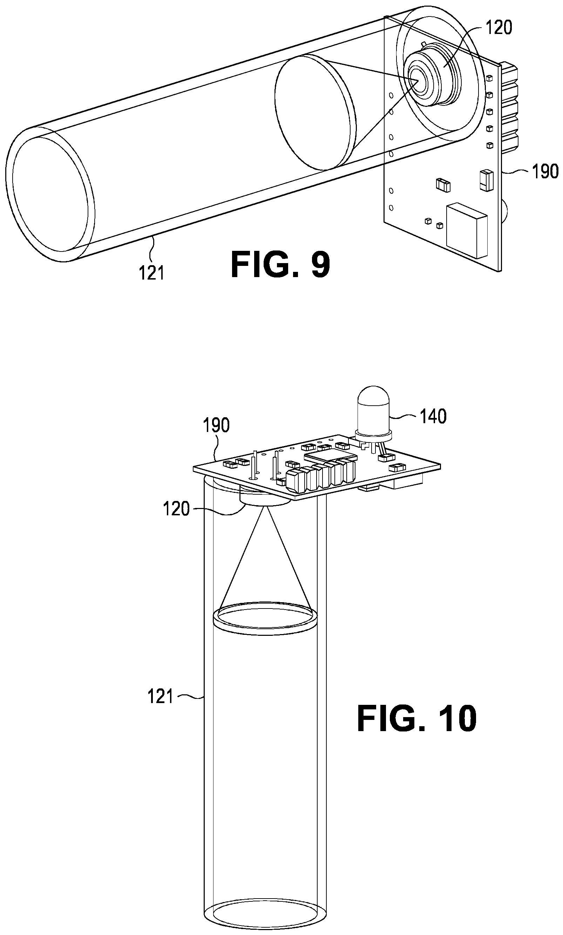

FIGS. 8, 9, and 10 illustrate various perspective views of smart leash 100 components. The system features a highly versatile PCB 190 that allows seamless integration and configuration of diverse sensors 120. The PCB 390 is thoughtfully designed to accommodate various sensor 120 types, offering a flexible platform for multiple applications. Standardized connectors and interfaces further simplify the addition, upgrading, or swapping of sensors 120, reducing costs and accelerating deployment.

Among the supported sensors 120, in some embodiments, is an IR sensor for its ability to detect heat radiation emitted by surrounding environment. Certain embodiments of the smart leash 100 incorporate a tube 121 surrounding the sensor 120, enabling precise directional sensing. In some embodiments, this tube 121 optimizes the smart leash's 100 accuracy and efficiency by selectively focusing the IR sensor's capabilities on specific regions of the surrounding environment.

Complementing the sensor system, in embodiments, is an indicator 140. In some embodiments, the indicator 140 is an LED light capable of dynamically changing color or flashing to provide visual cues in response to detected conditions. The indicator 140 can be programmed to respond to specific environmental thresholds or events, offering valuable feedback, such as warning users of surfaces that are too hot for safe passage. This enhanced visual feedback makes the smart leash 100 highly user-friendly and intuitive, significantly enhancing its overall usability.

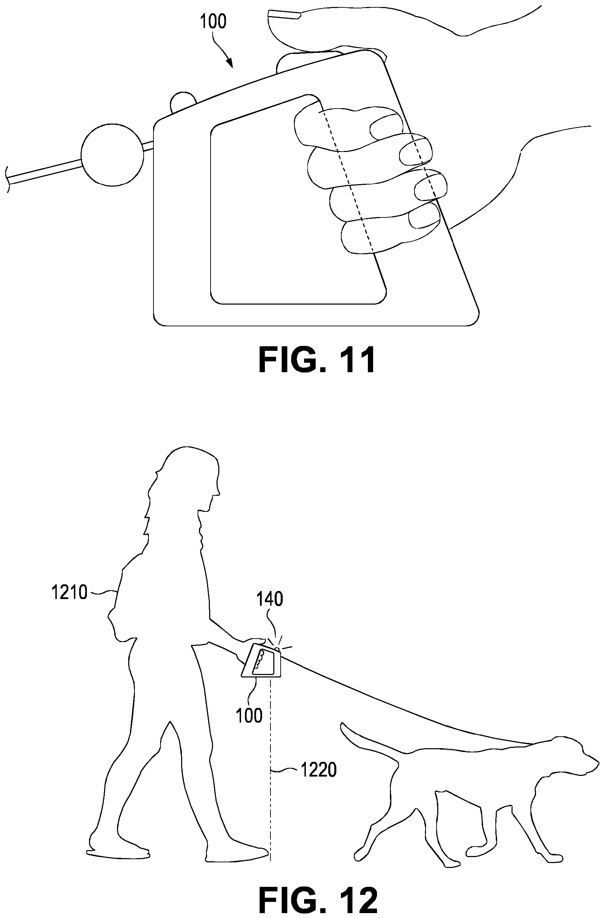

FIG. 11 showcases an illustrative embodiment of the smart leash's exterior functional design. In this embodiment, the smart leash 100 features a gripping pistol-like side where the owner holds the smart leash 100, providing a secure and comfortable grip during use. Additionally, in this embodiment, the smart leash 100 incorporates a flat lower surface that is substantially parallel to the ground when in use. This design feature, particularly in embodiments where an IR sensor is utilized, ensures that the sensor points directly at the walking surface such that accurate temperature measurements or data is accomplished.

The exterior of the smart leash 100 can be constructed using a wide range of suitable materials, providing flexibility in design and functionality. For instance, the handle of the smart leash 100 could be made from 3D printed plastic, which offers a lightweight and customizable option. Alternatively, durable materials like reinforced nylon or rubber may be employed to enhance the smart leash's 100 strength and longevity, ensuring its suitability for more robust outdoor activities. Furthermore, for a sleek and modern look, aluminum or stainless steel might be used for the smart leash's 100 body, offering a balance between sturdiness and aesthetics. Additionally, eco-friendly and sustainable materials, such as biodegradable plastics or recycled materials, could be chosen to align with environmentally conscious design principles. The versatility in material options allows for the smart leash 100 to be tailored to specific user preferences and functional requirements.

One example of the material versatility for the smart leash 100 is the use of aluminum coupler that connects to a traditional Over-the-Shoulder ("OTS") dog leash. Aluminum, renowned for its lightweight yet durable properties, makes it an ideal choice for the coupler, ensuring a secure and reliable attachment between the smart leash 100 and the OTS dog leash. This aluminum coupler provides a seamless integration of the smart features into the existing leash, enabling users to utilize their preferred OTS dog leash while still benefiting from the smart leash's 100 innovative functionalities. The combination of advanced technology with tried-and-tested materials like aluminum not only ensures ease of use for pet owners but also ensures the safety and comfort of their pets during walks and outdoor adventures. This exemplifies how the smart leash 100 can be tailored to work harmoniously with existing pet accessories, such as the OTS dog leash, while delivering enhanced features for a more enjoyable and efficient pet walking experience. In some embodiments, the coupler is located on a side opposite to the gripping side of the smart leash 100, where the rope portion of a new or existing leash may be coupled. This design enables easy attachment of the leash, accommodating various leash configurations and types.

The top portion of the device's design may feature an actuation button, an indicator, or other components, as discussed previously. These components serve various functions, such as controlling the device's features or providing feedback to the user. However, in some embodiments, these components may not be a requirement, depending on the specific functionalities and user preferences, e.g., controls and alerts are done on external devices.

This design configuration offers several benefits, including a strong and secure grip for the owner, ease of use and handling, and adaptability to different leash styles and attachment options. The ergonomic and functional aspects of the design enhance the user experience and ensure efficient control of the smart leash.

FIG. 12 illustrates the smart leash 100, as depicted in FIG. 11, being utilized by an owner 1210 in a real-world environment. In this embodiment, during a dog walk, the owner 1210 firmly grips the ergonomic pistol-like handle of the smart leash 100, ensuring maximum comfort and control. To enhance safety and suitability during the walk, the smart leash 100 incorporates an environment monitoring and feedback system in embodiments. In embodiments, the owner 1210 activates the sensor system by effortlessly engaging an actuation button positioned on the handle. This design offers a single hand trigger or thumb actuation. The sensor system, which may include an IR sensor among others, is designed to capture various environmental parameters in real-time.

In embodiments, the smart leash 100 is equipped with an optional laser pointer that operates in conjunction with the sensor system. When activated, a precise laser beam 1220 is emitted from the laser pointer, effectively highlighting and indicating the area on the ground surface being measured by the sensor. This visual aid enables the owner 1210 to be informed of potential changes in the environment, such as temperature variations, or other environmental conditions, allowing them to make well-informed decisions for a safer and more enjoyable walk experience. In other embodiments, the laser pointer is omitted from the smart leash 100 without compromising the core functionality of the smart leash 100. The smart leash 100 is designed to be versatile and can be tailored to different uses.

The captured environmental data is then processed and conveyed to the user through an indicator 140, designed to provide intuitive and customizable feedback. In some embodiments, the smart leash 100 is equipped with an LED indicator, capable of displaying different colors, flashing patterns, or emitting distinct sounds based on the specific environmental factors detected. For example, a green light may indicate safe and optimal conditions, while a red light may signify potentially unsafe conditions, prompting the owner to take precautionary measures or cease walking the dog.

The indicator system is adaptable to alternative embodiments where different types of feedback are desirable. The smart leash 100 may utilize haptic feedback mechanisms, audible cues, or even a combination of sensory modalities to ensure effective communication with the owner 1210. The smart leash 100 is not limited to providing feedback solely through an integrated indicator system. In embodiments, the smart leash 100 offers seamless compatibility with external devices, such as mobile computing devices, smartwatches, or wearable computing devices. In certain embodiments, by wirelessly transmitting the captured environmental data to these external devices, the smart leash 100 empowers the owner 1210 with the freedom to monitor and analyze the information at their convenience. This compatibility enhances the user experience, enabling personalized settings, detailed data visualization, and seamless integration with other smart devices.

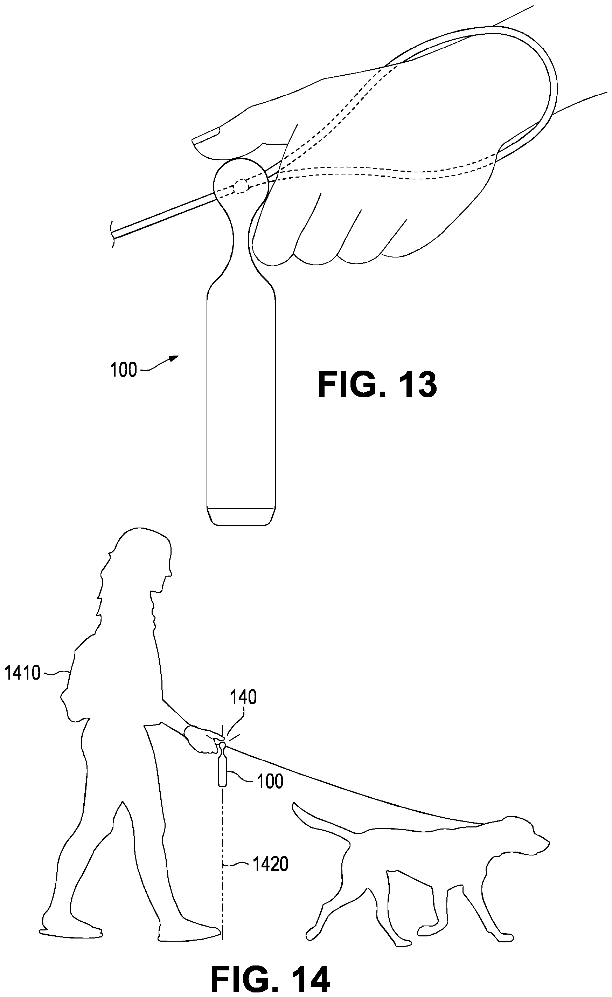

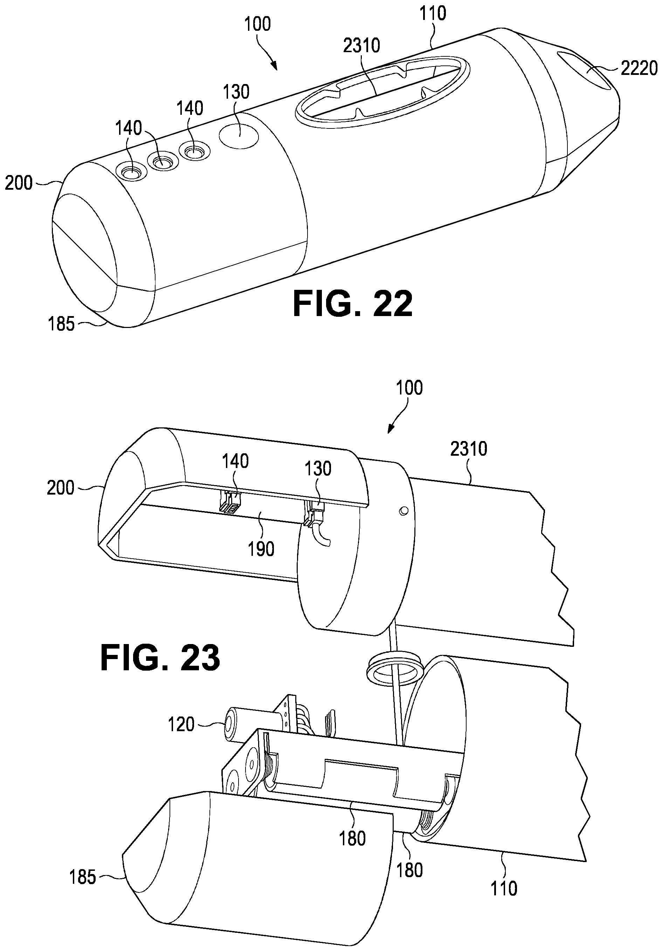

FIG. 13 illustrates an alternative embodiment of the smart leash 100. Unlike other embodiments, the smart leash 100 here offers a unique pendulum-like swinging motion during dog walks. In some embodiments, smart leash 100 introduces a snap on attachment mechanism (see, e.g., leash coupler 2220, FIG. 22), that allows easy integration with existing leashes, enabling dog owners to upgrade their standard leashes with smart functionalities. The smart leash 100, in this embodiment, retains the core features described in earlier embodiments, including an actuation mechanism, sensors, and/or an indicator, incorporating various components as discussed in reference to FIGS. 1-12. The smart leash's 100 exterior design and material composition closely resemble the variations and material choices discussed earlier in relation to the smart leash 100, as illustrated in FIG. 11. This alignment ensures consistency and continuity in the overall design, enhancing user familiarity and usability.

In some embodiments, the actuation mechanism is strategically positioned on the top of the smart leash 100, providing the owner with effortless control over its smart capabilities. By simply engaging the actuation mechanism, the sensor system is activated, initiating real-time measurement and monitoring of the surrounding environmental parameters. Depending on the embodiment, the smart leash 100 may include one or more sensors including, but not limited to, IR, temperature, humidity, air quality, and more. This comprehensive sensing capability ensures that the owner receives detailed and accurate information about the environment, enabling them to make informed decisions during the walk.

In certain embodiments, the smart leash 100 features an optional laser pointer, similar to the one described in FIGS. 11 and 12. The laser pointer emits a visible and precise laser beam, serving as a visual indicator that highlights specific areas on the surface being measured by the sensor system. This additional visual cue enhances the owner's situational awareness, helping them identify potential hazards or areas with varying environmental conditions.

As previously discussed, the indicator system of the smart leash 100 offers various modes of communication to provide real-time feedback to the owner. Whether it is through LED lights with color variations, distinct flashing patterns, audible cues, or haptic feedback, the leash ensures effective and personalized communication based on the captured environmental data.

FIG. 14 illustrates the smart leash 100, as depicted in FIG. 13, being utilized by an owner 1410 in a real-world environment. Similar to FIG. 12, the reference numbers in FIG. 14 correspond to similar components as described in FIGS. 11-13. In this scenario, an owner 1410 is using the smart leash 100 to take their dog on a walk.

A primary concern of the owner 1410 is the safety, health, comfort, and suitability of dog walks. To address this, the owner 1410 may utilize the smart functionalities of the smart leash 100 at any point in time during or while walking the dog. In certain embodiments, the owner activates any combination of the sensors by engaging an actuation button conveniently integrated into the leash's handle. The sensor includes, but is not limited to, an IR sensor, which accurately measures crucial walking service temperatures. In specific embodiments where the owner 1410 requires a visual indication of the measured area, the smart leash 100 includes an optional laser pointer. Upon activation, a precise laser beam 1420 is emitted from the laser pointer, effectively indicating the area on the surface being measured by the sensor system.

The smart leash 100 processes the captured environmental information and provides immediate feedback to the owner 1410 through an indicator 140. In some embodiments, the indicator 140 is an LED light that changes color to convey the status of the most recent measurement. For example, a yellow LED light may indicate rising temperatures, signaling to the owner 1410 to be cautious of the environmental conditions. As discussed previously, the indicator 140 of the smart leash 100 can be customized based on user preferences. Alternative embodiments utilize different indicators 140 such as haptic feedback, audible cues, or distinct flashing patterns implemented for communicating environmental data to the owner 1410. The smart leash 100 is not limited to relying solely on an integrated indicator system. In some embodiments, it offers seamless compatibility with external devices, such as mobile computing devices, wearable computing devices, and other computing devices. By leveraging these devices, the actuation and display of environmental information can be performed independently of the leash, empowering the owner 1410 with convenient and remote control over the leash's smart capabilities.

Similarly, while the inclusion of the laser pointer is optional in some embodiments, the smart leash 100 offers versatility in its design. For embodiments that do not include the laser pointer functionality, the leash continues to be operable without it, streamlining the walking experience while retaining the essential smart features. This makes the smart leash 100 a versatile and innovative tool that enhances the dog walking experience. With its advanced sensor system, optional laser pointer, customizable indicator, and compatibility with external devices, the leash ensures the dog's safety and the owner's peace of mind during every walk.

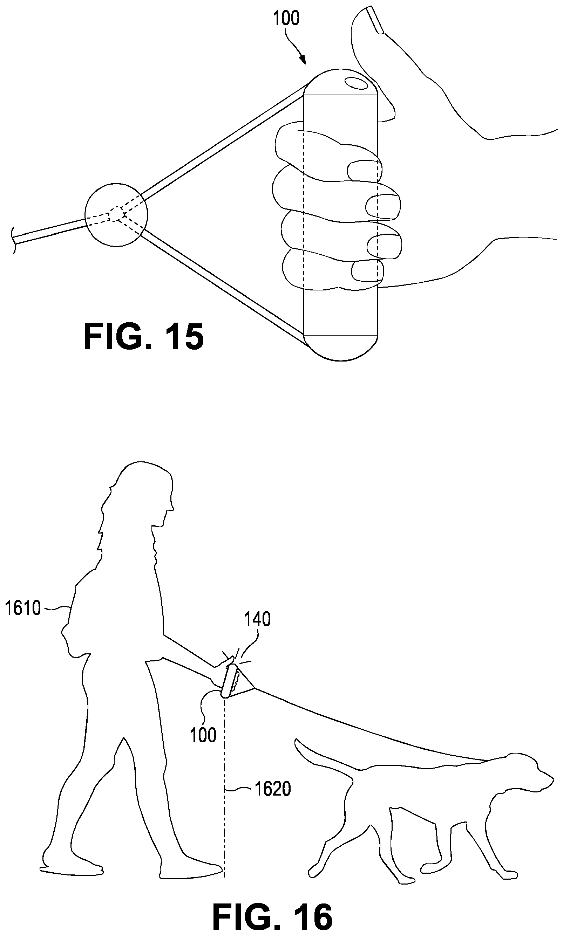

FIG. 15 showcases another alternative embodiment of the smart leash 100, which introduces a straight grip handle design. Smart leash 100, in this embodiment, offers a one-handed operation, providing dog owners with enhanced control and comfort during walks. In some embodiments, the design incorporates a strategically positioned actuation button at the top of the handle, allowing effortless activation of the smart functionalities by simply pushing with the owner's thumb. This feature enables real-time environmental monitoring and data capture as the sensor(s) is triggered. The smart leash's 100 exterior design and material composition closely resemble the variations and material choices discussed earlier in relation to the smart leash 100, as illustrated in FIG. 11. This alignment ensures consistency and continuity in the overall design, enhancing user familiarity and usability.

An advantage of this embodiment of the smart leash 100 is its seamless integration with existing leash lanyard loops commonly found in various traditional leashes. The smart leash 100 can be effortlessly placed within these loops, providing a secure and versatile attachment mechanism in certain embodiments. Moreover, certain embodiments of the smart leash 100 feature a single hook point for attached leads, streamlining the leash attachment process, and ensuring a reliable connection.

In embodiments, the straight grip handle of the smart leash 100 is thoughtfully designed to improve ergonomics and usability. Its comfortable and natural gripping allows for a firm hold, reducing hand fatigue, and enhancing the overall walking experience. The leash's single-handed operation is particularly beneficial for dog owners who wish to multitask or have mobility challenges during walks.

Additionally, the smart leash 100 is designed to be flexible and adaptable. It may incorporate any component or combination of components described in reference to FIGS. 1-14. This allows for customization based on the specific needs and preferences of dog owners, ensuring that the leash caters to a wide range of applications and use cases. Whether it be the sensor system, indicator mechanisms, attachment features, or other smart functionalities, the design of smart leash 100 accommodates the incorporation of diverse elements, making it a highly versatile solution.

FIG. 16 shows the utilization of the smart leash 100, as shown in FIG. 15, in a real-world environment by an owner 1610. Similar to FIG. 14, the reference numbers in FIG. 16 correspond to similar components as described in FIGS. 11-15. During a dog walk utilizing this embodiment, the owner 1610 takes advantage of the innovative straight grip handle design, allowing them to comfortably hold the smart leash 100 with their thumb pointing up. In embodiments, the smart leash 100 incorporates an actuation button conveniently positioned at the top of the handle, facilitating intuitive thumb-activated smart features that trigger real-time environmental monitoring and data capture. This actuation button empowers the owner 1610 with improved mobility and multitasking capabilities during walks, making it a user-friendly and practical accessory.

When the owner 1610 desires to capture various environmental parameters in real-time, they can effortlessly activate the smart features of the smart leash 100 using an actuation button, in some embodiments. The leash incorporates one or more sensors, including an IR sensor, accurately measuring crucial environmental parameters. In some embodiments to provide for a visual indication of the measured area, the smart leash 100 also includes an optional laser pointer. Upon activation, a precise laser beam 1620 emits from the laser pointer, effectively indicating the general area on the surface being measured by the sensor system.

The smart leash 100 processes the captured environmental information and provides immediate feedback to the owner 1610 through an indicator 140. In some embodiments, this indicator is an LED light that changes color to convey the status of the most recent measurement. For example, a red LED light may indicate high temperatures, signaling to the owner 1610 that it is unsuitable to walk the dog at this time. The indicator 140 of the smart leash 100 can be different based on the embodiment. Alternative embodiments utilize different indicators 140, such as haptic feedback, audible cues, distinct flashing patterns, or a combination of indicators, to communicate environmental data effectively. Moreover, the smart leash 100 is not limited to relying solely on an integrated indicator system. In certain embodiments, it offers seamless compatibility with external devices, such as mobile computing devices and wearable computing devices, granting the owner 1310 convenient and remote control over the leash's smart capabilities.

Similarly, while the inclusion of the laser pointer may be optional, the smart leash 100 remains versatile in design. Owners who do not require the laser pointer functionality can use the leash without it, streamlining the walking experience while retaining the essential smart features. With its incorporation of advanced sensor(s), optional laser pointer, customizable indicator, and compatibility with external devices, the leash ensures the safety of the dog and provides peace of mind to the owner 1610 during every walk.

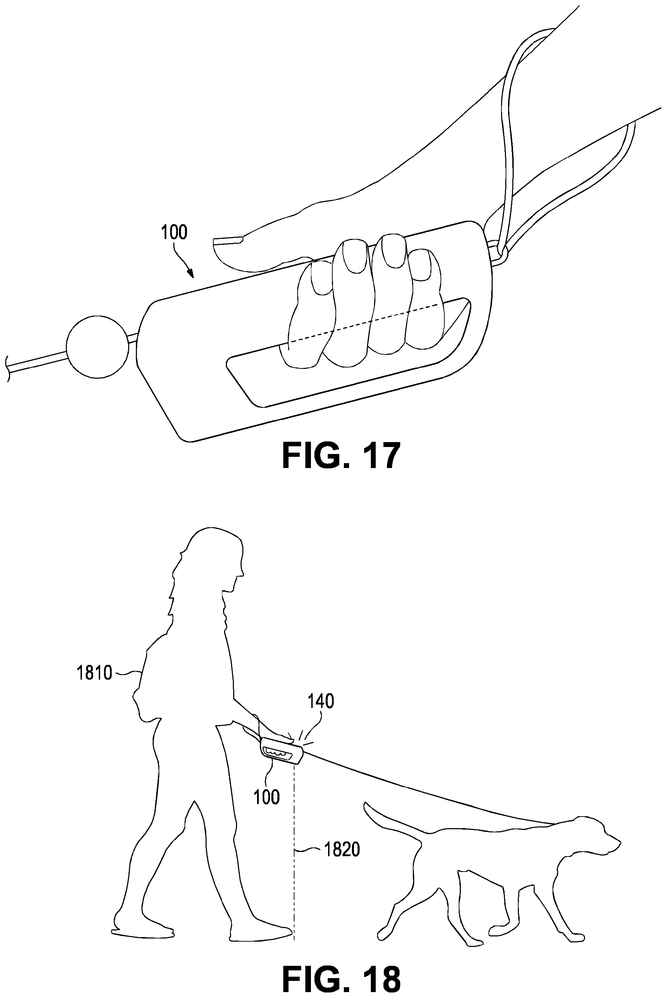

FIG. 17 shows an alternative embodiment of the smart leash 100, which features a flashlight-like grip handle, adding a unique and ergonomic element to the design. This innovative grip handle enhances the leash's usability and provides a comfortable and secure hold for the owner during walks. With the emphasis on user convenience in some embodiments, smart leash 100 is designed for single-handed operation, empowering dog owners with enhanced mobility and flexibility during their walks. In some embodiments where an actuation button is included, the actuation button is conveniently positioned at the top of the grip handle of smart leash 100. This placement allows for intuitive thumb-activated smart features, facilitating easy activation of the leash's functionalities. In certain embodiments, the actuation button serves as a gateway to trigger the leash's one or more sensors, enabling real-time environmental monitoring and data capture.

The smart leash's 100 exterior design and material composition closely resemble the variations and material choices discussed earlier in relation to the smart leash 100, as illustrated in FIG. 11. This alignment ensures consistency and continuity in the overall design, enhancing user familiarity and usability. Furthermore, smart leash 100 offers versatile attachment options, seamlessly integrating with existing leashes commonly used by dog owners. Its attachment mechanism ensures a secure and hassle-free connection between the leash and different leash models, providing a comprehensive solution for dog owners seeking to upgrade their conventional leashes into advanced smart leashes.

Additionally, the smart leash 100 may incorporate any component or combination of components described in reference to FIGS. 1-16. In some embodiments, the smart leash 100 incorporates a sensor that self-levels. This is particularly helpful when the sensor being utilized is an IR sensor. This innovative design ensures that the sensor always points down, maintaining optimal performance and accurate measurements. The self-leveling feature ensures that the IR sensor maintains the correct orientation for precise environmental data capture, enhancing the reliability and functionality of the smart leash 100.

FIG. 18 showcases the utilization of the smart leash 100, as depicted in FIG. 17, in a real-world environment by a dog owner 1810. The reference numbers in FIG. 18 correspond to similar components as described in FIGS. 11-17. During a dog walk utilizing this embodiment, the owner 1810 embraces the innovative flashlight-like grip handle design of the smart leash 100 as depicted in FIG. 17, offering a comfortable and secure hold with its distinctive shape. In some embodiments, the smart leash 100 incorporates an actuation button, positioned at the top of the grip handle, facilitating intuitive thumb-activated smart features that unleash real-time environmental monitoring and data capture. The actuation button allows the owner 1810 with enhanced mobility and multitasking capabilities during walks, epitomizing user-friendliness and practicality in this smart accessory.

When the owner 1810 seeks to capture various environmental parameters in real-time, they can effortlessly engage the smart features of the smart leash 100 using an actuation button, as provided in certain embodiments. The smart leash includes, among other things, one or more sensors, such as an IR sensor, measuring vital environmental parameters. To offer visual indication of the measured area, in select embodiments, the smart leash 100 incorporates an optional laser pointer. Once activated, a precise laser beam 1820 emanates from the laser pointer, signifying the area on the surface being measured by the sensor.

The smart leash 100 processes the captured environmental information and promptly communicates it to the owner 1810 through a multifunctional indicator 140. In certain embodiments, the indicator employs a single or an array of LED lights, transitioning colors to convey the status of the most recent measurement. For instance, a red LED light may indicate elevated temperatures, signaling to the owner 1810 that it may be unsuitable to walk the dog at that time. As mentioned earlier, the indicator 140 of the smart leash 100 can be customized depending on the specific embodiment. In addition, alternative embodiments adopt distinct modes of communication sensor(s) data, such as haptic feedback, melodious audible cues, or flashing patterns, conveying essential environmental data to the owner 1810. In other embodiments, the smart leash 100 seamlessly integrates with external devices, such as mobile computing devices and wearable computing devices, effectively elevating the leash's smart capabilities by providing the owner 1810 with convenient use and remote control.

Depending on the embodiments, the smart leash 100 may not incorporate the laser pointer functionality, while retaining the core smart features. This adaptability makes the smart leash 100 a versatile tool that makes owners more informed about the walking experience of dogs.

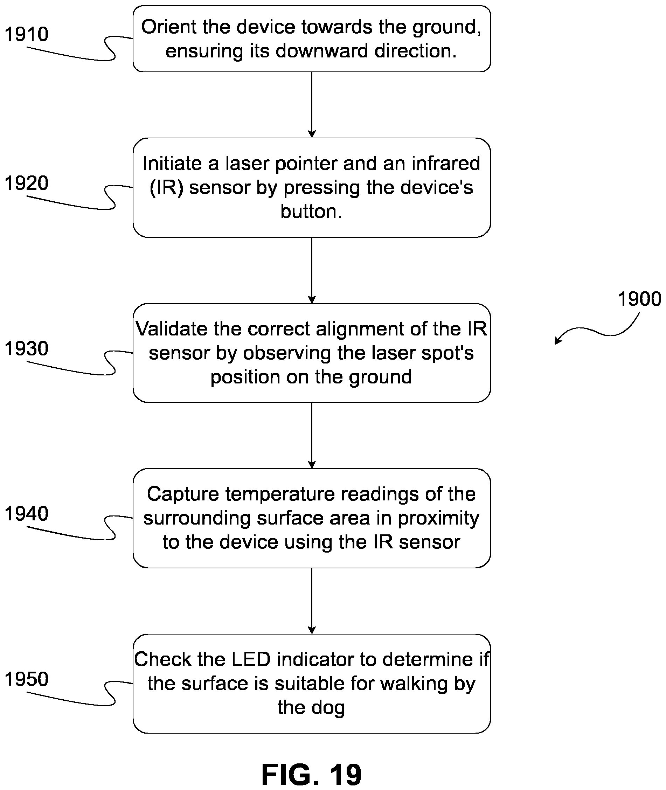

FIG. 19 outlines an illustrative method 1900 for utilizing the various embodiments of the devices described in the present disclosure. The method 1900 outlines the steps taken to measure one or more environmental conditions and display them to owners. The steps outline the use of a device that includes an IR sensor, a laser pointer, an LED indicator, and an actuation button for simplicity. However, as disclosed herein, the inclusion of all of these components is not mandatory.

Some embodiments incorporate different sensors or sensor combinations, catering to specific environmental monitoring needs. Other embodiments may exclude the use of a laser pointer, while retaining the core smart functionalities. Yet further embodiments are capable of communicating with external devices such as mobile computing devices or wearable computing devices. In such cases, the actuation mechanism and indicator functionalities are controlled and displayed directly on the external devices, the smart leash, or both, and thus, potentially rendering the on-device indicator and/or actuation button unnecessary.

The method 1900 outlines a series of steps to ensure a safe and informed dog-walking experience for the owner. At Step 1910, where the owner orients the device towards the ground, aligning it in a downward direction to facilitate accurate data capture. This step may not be required where the device includes a sensor that self-levels. At Step 1920, the user initiates the device's smart features, activating both a laser pointer and an IR sensor, with a simple press of the device's actuation button.

Step 1930 involves validating the correct alignment of the IR sensor by observing the laser pointer's beam position on the ground. This alignment confirmation process ensures the device is ready to capture precise and reliable temperature readings of the surrounding surface area in proximity to the device. In some embodiments, the smart leash must be positioned at minimum of 36 inches away from the surface being measured for temperature. At Step 1940, the IR sensor, captures the relevant environmental data, specifically the temperature, enabling the user to gain insights into the surface conditions during the dog walk.

Finally, at Step 1950, the owner checks the information provided by the device's LED indicator to make an informed decision regarding the suitability of the surface for walking the dog. The LED indicator displays information that guides the owner in determining whether the surface is safe and appropriate for their dog. For instance, a green LED light may indicate an optimal surface temperature for the dog's paws, signaling a safe and pleasant walking experience, a yellow LED light may signal rising temperatures as a warning, while a red LED light may indicate potentially unsuitable conditions, prompting the user to reconsider their walking route or take necessary precautions. As disclosed herein, alternative embodiments may use other indicators.

Following this detailed method 1900, the owner can confidently and responsibly ensure their dog's safety and comfort during every walk. The integration of advanced environmental monitoring features in the various embodiments of the disclosed devices empowers dog owners with valuable insights, enabling them to make well-informed decisions for their pets' well-being.

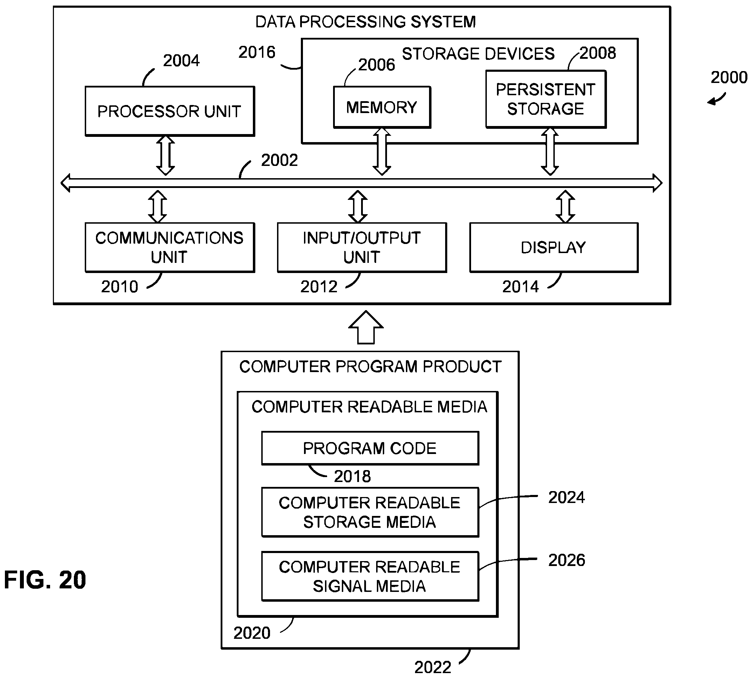

FIG. 20 shows, in accordance with aspects of the present disclosure, an example describing a data processing system 2000. In this example, data processing system 2000 is an illustrative data processing system suitable for implementing aspects of methods and systems of the smart leash. More specifically, in some examples, devices that are embodiments of data processing systems, e.g., smartphones, tablets, personal computers may be used by one or more users such as retailers, customers, advertisers, consumers, patients, healthcare providers, etc. Further, devices that are embodiments of data processing systems, e.g., smartphones, tablets, personal computers, may be used as one or more server(s) in encoding, decoding, and communicating with one or more mobile communication devices.

In this illustrative example, data processing system 2000 includes communications framework 2002. Communications framework 2002 provides communications between processor unit 2004, memory 2006, persistent storage 2008, communications unit 2010, input/output ("I/O") unit 2012, and display 2014. Memory 2006, persistent storage 2008, communications unit 2010, input/output ("I/O") unit 2012, and display 2014 are examples of resources accessible by processor unit 2004 via communications framework 2002.

Processor unit 2004 serves to run instructions that may be loaded into memory 2006. Processor unit 2004 may be a number of processors, a multi-processor core, or some other type of processor, depending on the particular implementation. Further, processor unit 2004 may be implemented using a number of heterogeneous processor systems in which a main processor is present with secondary processors on a single chip. As another illustrative example, processor unit 2004 may be a symmetric multi-processor system containing multiple processors of the same type.

Memory 2006 and persistent storage 2008 are examples of storage devices 2016. A storage device is any piece of hardware that is capable of storing information, such as, for example, without limitation, data, program code in functional form, and other suitable information either on a temporary basis or a permanent basis.

Storage devices 2016 also may be referred to as computer-readable storage devices in these examples. Memory 2006, in these examples, may be, for example, a random access memory or any other suitable volatile or non-volatile storage device. Persistent storage 2008 may take various forms, depending on the particular implementation.

For example, persistent storage 2008 may contain one or more components or devices. For example, persistent storage 2008 may be a hard drive, a flash memory, a rewritable optical disk, a rewritable magnetic tape, or some combination of the above. The media used by persistent storage 2008 also may be removable. For example, a removable hard drive may be used for persistent storage 2008.

Communications unit 2010, in these examples, provides for communications with other data processing systems or devices. In these examples, communications unit 2010 is a network interface card. Communications unit 2010 may provide communications through the use of either or both physical and wireless communications links.

Input/output ("I/O") unit 2012 allows for input and output of data with other devices that may be connected to data processing system 2000. For example, input/output ("I/O") unit 2012 may provide a connection for user input through a keyboard, a mouse, and/or some other suitable input device. Further, input/output ("I/O") unit 2012 may send output to a printer. Display 2014 provides a mechanism to display information to a user.

Instructions for the operating system, applications, and/or programs may be located in storage devices 2016, which are in communication with processor unit 2004 through communications framework 2002. In these illustrative examples, the instructions are in a functional form on persistent storage 2008. These instructions may be loaded into memory 2006 for execution by processor unit 2004. The processes of the different embodiments may be performed by processor unit 2004 using computer-implemented instructions, which may be located in a memory, such as memory 2006.

These instructions are referred to as program instructions, program code, computer usable program code, or computer-readable program code that may be read and executed by a processor in processor unit 2004. The program code in the different embodiments may be embodied on different physical or computer-readable storage media, such as memory 2006 or persistent storage 2008.

Program code 2018 is located in a functional form on computer-readable media 2020 that is selectively removable and may be loaded onto or transferred to data processing system 2000 for execution by processor unit 2004. Program code 2018 and computer-readable media 2020 form computer program product 2022 in these examples. In one example, computer-readable media 2020 may be computer-readable storage media 2024 or computer-readable signal media 2026.

Computer-readable storage media 2024 may include, for example, an optical or magnetic disk that is inserted or placed into a drive or other device that is part of persistent storage 2008 for transfer onto a storage device, such as a hard drive, that is part of persistent storage 2008. Computer-readable storage media 2024 also may take the form of a persistent storage, such as a hard drive, a thumb drive, or a flash memory, that is connected to data processing system 2000. In some instances, computer-readable storage media 2024 may not be removable from data processing system 2000.

In these examples, computer-readable storage media 2024 is a physical or tangible storage device used to store program code 2018 rather than a medium that propagates or transmits program code 2018. Computer-readable storage media 2024 is also referred to as a computer-readable tangible storage device or a computer-readable physical storage device. In other words, computer-readable storage media 2024 is non-transitory.

Alternatively, program code 2018 may be transferred to data processing system 2000 using computer-readable signal media 2026. Computer-readable signal media 2026 may be, for example, a propagated data signal containing program code 2018. For example, computer-readable signal media 2026 may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some illustrative embodiments, program code 2018 may be downloaded over a network to persistent storage 2008 from another device or data processing system through computer-readable signal media 2026 for use within data processing system 2000. For instance, program code stored in a computer-readable storage medium in a server data processing system may be downloaded over a network from the server to data processing system 2000. The data processing system providing program code 2018 may be a server computer, a client computer, or some other device capable of storing and transmitting program code 2018.

The different components illustrated for data processing system 2000 are not meant to provide architectural limitations to the manner in which different embodiments may be implemented. The different illustrative embodiments may be implemented in a data processing system including components in addition to and/or in place of those illustrated for data processing system 2000. Other components shown in FIG. 20 can be varied from the illustrative examples shown. The different embodiments may be implemented using any hardware device or system capable of running program code. As one example, data processing system 2000 may include organic components integrated with inorganic components and/or may be comprised entirely of organic components excluding a human being. For example, a storage device may be comprised of an organic semiconductor.

In another illustrative example, processor unit 2004 may take the form of a hardware unit that has circuits that are manufactured or configured for a particular use. This type of hardware may perform operations without needing program code to be loaded into a memory from a storage device to be configured to perform the operations.

For example, when processor unit 2004 takes the form of a hardware unit, processor unit 2004 may be a circuit system, an application specific integrated circuit ("ASIC"), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, a field programmable logic array, a field programmable gate array, and other suitable hardware devices. With this type of implementation, program code 2018 may be omitted, because the processes for the different embodiments are implemented in a hardware unit.

In still another illustrative example, processor unit 2004 may be implemented using a combination of processors found in computers and hardware units. Processor unit 2004 may have a number of hardware units and a number of processors that are configured to run program code 2018. With this depicted example, some of the processes may be implemented in the number of hardware units, while other processes may be implemented in the number of processors.

In another example, a bus system may be used to implement communications framework 2002 and may be comprised of one or more buses, such as a system bus or an input/output ("I/O") bus. Of course, the bus system may be implemented using any suitable type of architecture that provides for a transfer of data between different components or devices attached to the bus system.

Additionally, communications unit 2010 may include a number of devices that transmit data, receive data, or both transmit and receive data. Communications unit 2010 may be, for example, a modem or a network adapter, two network adapters, or some combination thereof. Further, a memory may be, for example, memory 2006, or a cache, such as that found in an interface and memory controller hub that may be present in communications framework 2002.

The flowcharts and block diagrams described herein illustrate the architecture, functionality, and operation of possible implementations of systems, methods, and computer program products according to various illustrative embodiments. In this regard, each block in the flowcharts or block diagrams may represent a module, segment, or portion of code, which comprises one or more executable instructions for implementing the specified logical function or functions. It should also be noted that, in some alternative implementations, the functions noted in a block may occur out of the order noted in the drawings. For example, the functions of two blocks shown in succession may be executed substantially concurrently, or the functions of the blocks may sometimes be executed in the reverse order, depending upon the functionality involved.

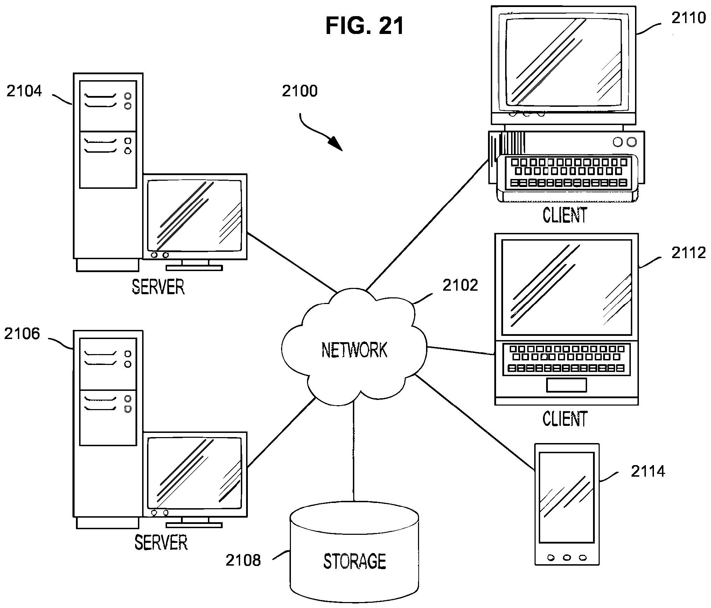

FIG. 21 shows an example describing a general network data processing system 2100, interchangeably termed a network, a computer network, a network system, or a distributed network, aspects of which may be included in one or more illustrative embodiments of methods and systems of the smart leash. For example, one or more mobile computing devices or data processing devices may communicate with one another or with one or more servers(s) through the network. It should be appreciated that FIG. 21 is provided as an illustration of one implementation and is not intended to imply any limitation with regard to environments in which different embodiments may be implemented. Many modifications to the depicted environment may be made.

Network data processing system 2100 is a network of computers, each of which is an example of data processing system 2000, and other components. Network data processing system 2100 may include network 2102, which is a medium configured to provide communications links between various devices and computers connected together within network data processing system 2100. Network 2102 may include connections such as wired or wireless communication links, fiber optic cables, and/or any other suitable medium for transmitting and/or communicating data between network devices, or any combination thereof.

In the depicted example, a first network device 2104 and a second network device 2106 connect to network 2102, as does an electronic storage device 2108. Network devices 2104 and 2106 are each examples of data processing system 2000, described above. In the depicted example, devices 2104 and 2106 are shown as server computers. However, network devices may include, without limitation, one or more personal computers, mobile computing devices such as personal digital assistants ("PDAs"), tablets, and smart phones, handheld gaming devices, wearable devices, tablet computers, routers, switches, voice gates, servers, electronic storage devices, imaging devices, and/or other networked-enabled tools that may perform a mechanical or other function. These network devices may be interconnected through wired, wireless, optical, and other appropriate communication links.

In addition, client electronic devices, such as a client computer 2110, a client laptop or tablet 2112, and/or a client smart device 2114, may connect to network 2102. Each of these devices is an example of data processing system 2000, described above regarding FIG. 20. Client electronic devices 2110, 2112, and 2114 may include, for example, one or more personal computers, network computers, and/or mobile computing devices such as personal digital assistants ("PDAs"), smart phones, handheld gaming devices, wearable devices, and/or tablet computers, and the like. In the depicted example, server 2104 provides information, such as boot files, operating system images, and applications to one or more of client electronic devices 2110, 2112, and 2114. Client electronic devices 2110, 2112, and 2114 may be referred to as "clients" with respect to a server such as server computer 2104. Network data processing system 2100 may include more or fewer servers and clients or no servers or clients, as well as other devices not shown.

Client smartdevice 2114 may include any suitable portable electronic device capable of wireless communications and execution of software, such as a smartphone or a tablet. Generally speaking, the term "smartphone" may describe any suitable portable electronic device having more advanced computing ability and network connectivity than a typical mobile phone. In addition to making phone calls (e.g., over a cellular network), smartphones may be capable of sending and receiving emails, texts, and multimedia messages, accessing the Internet, and/or functioning as a web browser. Smartdevices (e.g., smartphones) may also include features of other known electronic devices, such as a media player, personal digital assistant, digital camera, video camera, and/or global positioning system. Smartdevices (e.g., smartphones) may be capable of connecting with other smartdevices, computers, or electronic devices wirelessly, such as through near field communications ("NFC"), BLUETOOTH^{®}, Wi-Fi, or mobile broadband networks. Wireless connectivity may be established among smartdevices, smartphones, computers, and other devices to form a mobile network where information can be exchanged.

Program code located in system 2100 may be stored in or on a computer recordable storage medium, such as persistent storage 2008 in FIG. 20, and may be downloaded to a data processing system or other device for use. For example, program code may be stored on a computer recordable storage medium on server computer 2104 and downloaded for use to client 2110 over network 2102 for use on client 2110.

Network data processing system 2100 may be implemented as one or more of a number of different types of networks. For example, system 2100 may include an intranet, a local area network ("LAN"), a wide area network ("WAN"), or a personal area network ("PAN"). In some examples, network data processing system 2100 includes the Internet, with network 2102 representing a worldwide collection of networks and gateways that use the transmission control protocol/Internet protocol ("TCP/IP") suite of protocols to communicate with one another. At the heart of the Internet is a backbone of high-speed data communication lines between major nodes or host computers. Thousands of commercial, governmental, educational and other computer systems may be utilized to route data and messages. FIG. 21 is intended as an example, and not as an architectural limitation for any illustrative embodiments.

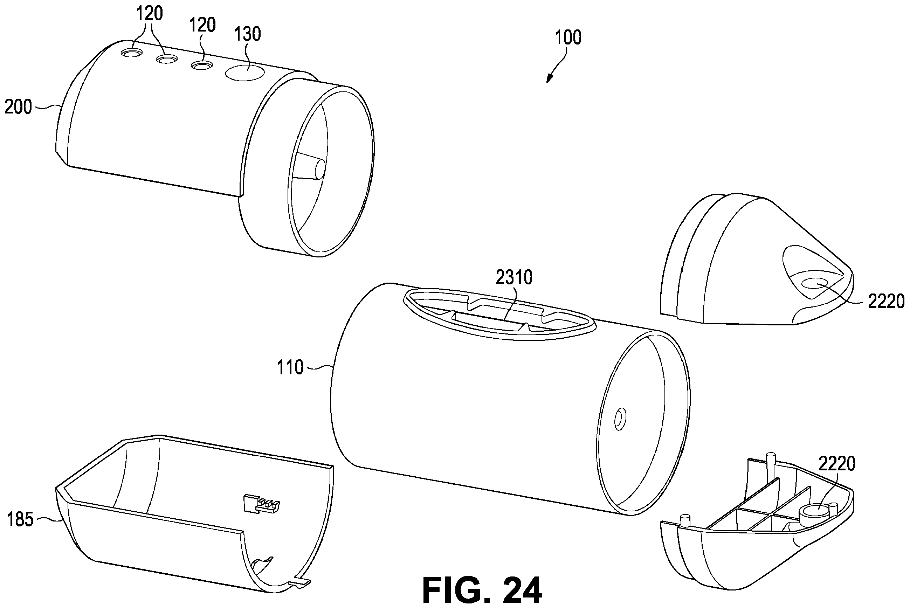

Referring now to FIGS. 22 through 24, a preferred embodiment of a smart leash 100 is depicted. In this illustrative embodiment, smart leash 100 may feature a waste receptacle bag compartment 110 configured to hold a number of waste receptacle bags 2310. Power source 180 may be contained behind a power source cover 185, that protects the power source 180 from exposure to contamination or harsh environmental conditions. In the preferred embodiment of FIGS 22-24, the actuation button 130 (or switch or trigger, etc.) may be positioned in line with one or more indicators 140 for indicating environmental conditions. Certain embodiments may also feature a coupler 2220 that permits easy attachment between the smart leash 100 and another article, such as a keychain ring, belt, harness, pet tether, pet leash, or backpack. In the referenced embodiment, leash coupler 2220 is a loop that may be attached to a carabiner, snap hook, or that a leash may be threaded through. Other couplers 2220 may include integrated carabiners, snap hooks, open hooks, or any other mechanism suitable for attaching smart leash 100 to another article.

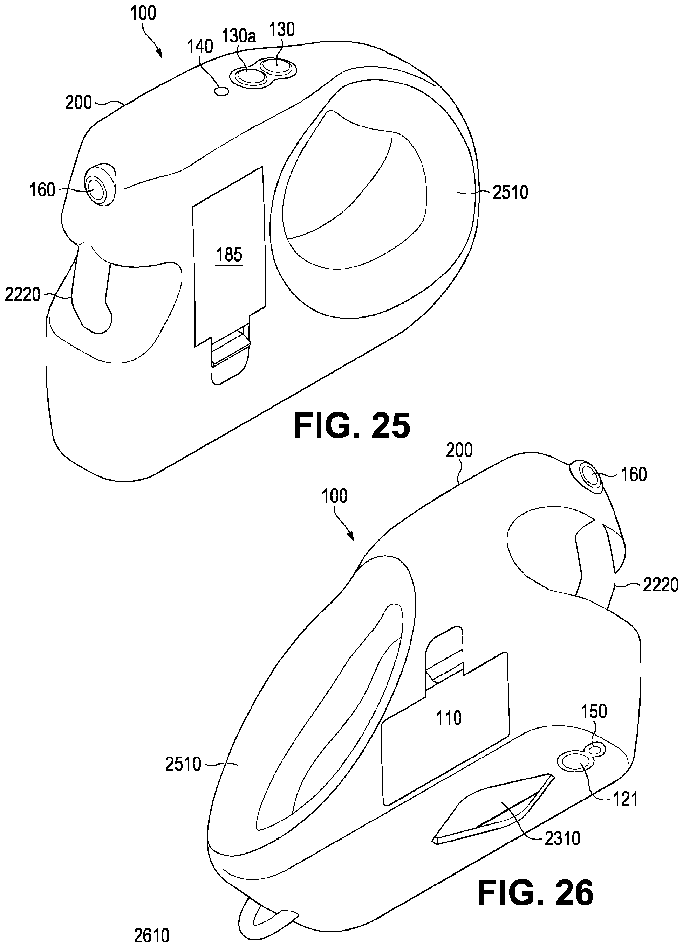

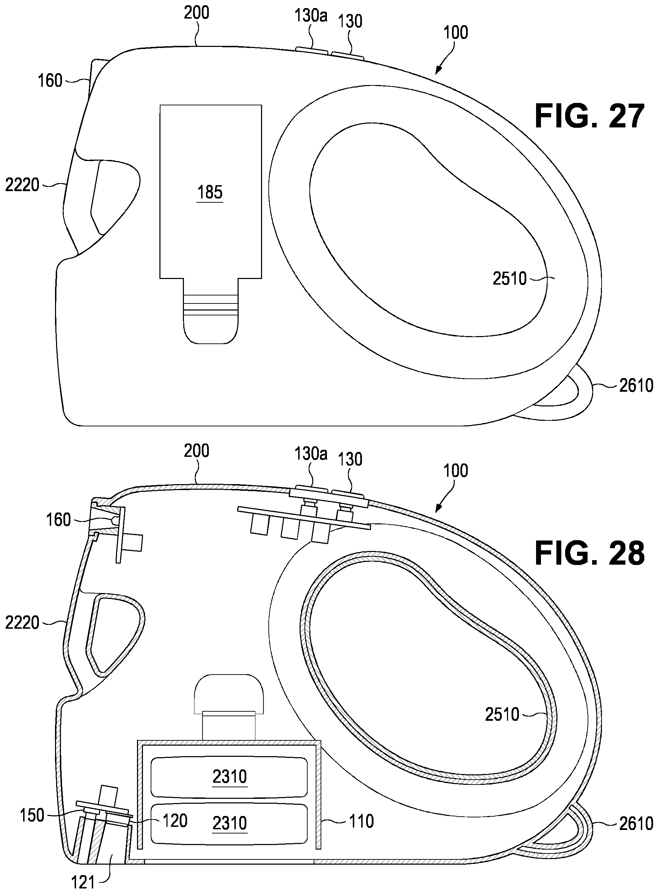

Referring now to FIGS 25-28, an additional preferred, illustrative embodiment featuring ergonomic design is depicted. This embodiment features a cover 200 that contains all components of smart leash 100 described above. In some embodiments, cover 200 defines a handle including a molded grip 2510. The molded grip 2510 may be made of rubber, plastic, or any material that is sufficiently compressible to improve the comfort of the grip 2510 in the hand and/or sufficiently frictional to decrease the chance of the grip 2510 slipping from the hand.

In this and other embodiments, smart leash 100 features ergonomic orientation such that an owner (1220, 1420, 1620, 1820) may comfortably hold the smart leash 100 with all components oriented for intended use. When held in by an owner 1220, 1420, 1620, 1820 the embodiment depicted in FIGS 25-28 allows the owner to comfortably direct light source 160 and coupler 2220 away from the owner. When held in by an owner 1220, 1420, 1620, 1820 the embodiment depicted in FIGS 25-28 allows the owner to comfortably orient actuation button 130, actuation mechanism 130a, and indicator 140 towards the owner for easy visibility and activation. When held in by an owner 1220, 1420, 1620, 1820 the embodiment depicted in FIGS 25-28 allows the owner to comfortably orient sensor 120 and laser pointer 150 towards the ground or another surface. Each of these orientations allows an owner 1220, 1420, 1620, 1820 to comfortably activate and utilize each feature of the smart leash 100 of FIGS 25-28 with one hand while simultaneously maintaining control over a pet leash attached to the coupler 2220 or second coupler 2610.

A second coupler 2610 may be included on the smart leash 100 so that the smart leash 100 may simultaneously be attached to two different articles, for example, a leash and a tether.

The present disclosure encompasses novel methods and systems that revolutionize owners' engagement and interaction with their pets during walks, surpassing the limitations of conventional leashes. This disclosure introduces various innovative devices and methods, leveraging the smart functionalities of smart leashes, to provide seamless access to a wide range of real-time environmental conditions. Smart leashes incorporate embedded sensors, communication modules, and interactive features, empowering users with real-time feedback and information. These devices and methods prove particularly valuable in situations where obtaining other surrounding environmental condition information is not feasible.

The methods and systems address inefficiencies in traditional leashes and ensure optimal safety and comfort for owners and their pets. The interactive capabilities of smart leashes minimize the need for extensive user involvement, enabling users to receive alerts, warnings, and notifications, thereby enhancing their safety and convenience during pet care and outdoor activities.

With the smart leashes' versatile design and functionalities, users can enjoy a seamless awareness of their surroundings. The carefully crafted exterior design and material composition of the smart leashes ensure durability and comfort during use. The integration of smart features sets it apart from conventional leashes.

As disclosed herein, the smart leashes offer several advantages over conventional leashes. They convey real-time information and alerts, enhancing user safety and decision-making during pet care activities. The seamless integration of sensors, communication modules, and interactive features sets a new standard in the field of pet care and outdoor gear. Users can now enjoy a more informed and interactive experience during their outdoor adventures, making the smart leash a valuable addition to their pet care toolkit.

It will be appreciated that the disclosure is not restricted to the particular embodiment that has been described, and that variations may be made therein without departing from the scope of the disclosure as defined in the appending claims, as interpreted in accordance with principles of prevailing law, including the doctrine of equivalents or any other principle that enlarges the enforceable scope of a claim beyond its literal scope. Unless the context indicates otherwise, a reference in a claim to the number of instances of an element, be it a reference to one instance or more than one instance, requires at least the stated number of instances of the element but is not intended to exclude from the scope of the claim a structure or method having more instances of that element than stated. The word "comprise" or a derivative thereof, when used in a claim, is used in a nonexclusive sense that is not intended to exclude the presence of other elements or steps in a claimed structure or method.

The embodiments disclosed above may be summarized as clauses.

Clause 1: An apparatus for attachment to a pet leash, comprising: a sensor configured to read a temperature of a surface from a distance; a display configured to receive said temperature and display said temperature; a power source configured to power the sensor; and a coupler configured to attach the apparatus to a pet leash or pet tether.

Clause 2: The apparatus of clause 1 wherein said display is a screen of a smart device.

Clause 3: The apparatus of clause 1 further comprising a compartment for receiving waste receptacle bags.

Clause 4: The apparatus of clause 1 further comprising an actuation mechanism configured to activate the sensor.

Clause 5: The apparatus of clause 1 wherein said sensor continuously or periodically reads said temperature of said surface.

Clause 6: The apparatus of clause 1 further comprising a database configured to receive location data, time and date information, and said temperature; a first wireless connection between said apparatus and a smart device; a second wireless connection between said smart device and said database; and an interface for displaying said location data, time and date information, and said temperature; wherein said smart device receives said temperature from said apparatus through the first wireless connection and said database receives location data, time and date information, and said temperature from said smart device through the second wireless connection.

Clause 7: The apparatus of clause 6 wherein said interface further displays a map.

Clause 8: The apparatus of clause 1 further comprising an audio or tone generator configured to generate an alert sound when said temperature is above or below a threshold.

Clause 9: The apparatus of clause 1 further comprising a laser pointer.

Clause 10: An apparatus for attachment to a pet leash comprised of: a sensor configured to read a temperature of a surface from a distance; an indicator configured to receive said temperature and indicate whether said temperature is above or below a temperature threshold; a power source configured to power the sensor; and a coupler configured to attach the apparatus to a pet leash or tether.

Clause 11: The apparatus of clause 10 wherein said indicator is further comprised of one or more light-emitting diodes.

Clause 12: The apparatus of clause 10 further comprising an actuation mechanism configured to activate the sensor.

Clause 13: The apparatus of clause 10 wherein said sensor continuously or periodically reads said temperature of said surface.

Clause 14: The apparatus of clause 10 further comprising a database configured to receive location data, time and date information, and said temperature; a first wireless connection between said apparatus and a smart device; a second wireless connection between said smart device and said database; and an interface for displaying said location data, time and date information, and said temperature; wherein said smart device receives said temperature from said apparatus through the first wireless connection and said database receives location data, time and date information, and said temperature from said smart device through the second wireless connection.

Clause 15: The apparatus of clause 10 wherein said interface further displays a map.

Clause 16: The apparatus of clause 10 further comprising an audio or tone generator configured to generate an alert sound when said temperature is above or below a threshold.

Clause 17: The apparatus of clause 10 further comprising a laser pointer.

## Claims

**1.** An apparatus for attachment to a pet leash, comprising:
a sensor configured to read a temperature of a surface from a distance;
a display configured to receive said temperature and display said temperature or an indicator configured to receive said temperature and indicate whether said temperature is above or below a temperature threshold;
a power source configured to power the sensor; and
a coupler configured to attach the apparatus to a pet leash or pet tether.

**2.** The apparatus of claim 1 wherein said display is a screen of a smart device.

**3.** The apparatus of claim 1 further comprising a compartment for receiving waste receptacle bags.

**4.** The apparatus of claim 1 further comprising an actuation mechanism configured to activate the sensor.

**5.** The apparatus of claim 1 wherein said sensor continuously or periodically reads said temperature of said surface.

**6.** The apparatus of claim 1 further comprising:
a database configured to receive location data, time and date information, and said temperature;
a first wireless connection between said apparatus and a smart device;
a second wireless connection between said smart device and said database; and
an interface for displaying said location data, time and date information, and said temperature;
wherein said smart device receives said temperature from said apparatus through the first wireless connection and said database receives location data, time and date information, and said temperature from said smart device through the second wireless connection.

**7.** The apparatus of claim 6 wherein said interface further displays a map.

**8.** The apparatus of claim 1 further comprising an audio or tone generator configured to generate an alert sound when said temperature is above or below a threshold.

**9.** The apparatus of claim 1 further comprising a laser pointer.

**11.** The apparatus of any one of the preceding claims wherein said indicator is further comprised of one or more light-emitting diodes.

**12.** The apparatus of any one of the preceding claims further comprising an actuation mechanism configured to activate the sensor.

**13.** The apparatus of any one of the preceding claims wherein said sensor continuously or periodically reads said temperature of said surface.
